(19) Europäisches Patentamt
European Patent Office
Office européen des brevets

(11) **EP 3 990 375 B1**

(12) **EUROPÄISCHE PATENTSCHRIFT**

(45) Veröffentlichungstag und Bekanntmachung des Hinweises auf die Patenterteilung:
**18.09.2024 Patentblatt 2024/38**

(21) Anmeldenummer: **20734512.5**

(22) Anmeldetag: **23.06.2020**

(51) Internationale Patentklassifikation (IPC):
**B65G 21/20** (2006.01)     **B65G 43/08** (2006.01)
**B65G 47/84** (2006.01)     **B67C 7/00** (2006.01)

(52) Gemeinsame Patentklassifikation (CPC):
**B65G 47/846; B65G 21/2072; B65G 43/08;**
**B67C 7/0046**

(86) Internationale Anmeldenummer:
**PCT/EP2020/067409**

(87) Internationale Veröffentlichungsnummer:
**WO 2020/260227 (30.12.2020 Gazette 2020/53)**

(54) **VORRICHTUNG UND VERFAHREN ZUM TRANSPORTIEREN VON BEHÄLTERN**

DEVICE AND METHOD FOR TRANSPORTING CONTAINERS

DISPOSITIF ET PROCÉDÉ DE TRANSPORT DE CONTENANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2019 DE 102019117377**

(43) Veröffentlichungstag der Anmeldung:
**04.05.2022 Patentblatt 2022/18**

(73) Patentinhaber: **KHS GmbH**
**44143 Dortmund (DE)**

(72) Erfinder:
• **MUSZINSKI, Olaf**
 **65779 Kelkheim (DE)**
• **FAHLDIECK, Andreas**
 **55743 Idar-Oberstein (DE)**
• **STOLTE, Thomas**
 **55545 Bad Kreuznach (DE)**
• **WEIRICH, Dominik**
 **55543 Bad Kreuznach (DE)**

(56) Entgegenhaltungen:
EP-A1- 2 987 764     DE-A1- 102011 010 955
DE-A1- 102017 112 220     JP-A- 2000 211 722
JP-A- H 054 712     JP-A- H05 213 441
US-A1- 2018 290 837

**EP 3 990 375 B1**

**Beschreibung**

Die Erfindung bezieht sich auf eine Vorrichtung und ein Verfahren zum Transportieren von Behältern, und dabei insbesondere zum Transportieren von Behältern in einem Übergabebereich zwischen zwei in Transportrichtung benachbarten Transportelementen.

Vorrichtungen zum Transportieren von Behältern sind insbesondere in der Getränkeindustrie hinlänglich bekannt. Derartige Vorrichtungen können mehrere jeweils um eine vertikale Maschinenachse rotativ angetriebene Transportelemente aufweisen, die transportmäßig aneinander anschließen und eine Transportstrecke bilden, so dass ein Behälter durch Weitergabe von einem umlaufend angetriebenen Transportelement zum in Transportrichtung daran anschließenden Transportelement entlang einer mehrfach umgelenkten Transportstrecke gefördert wird. Dabei kann auch vorgesehen sein, dass es sich bei den benachbarten Transportelementen um ein rotativ umlaufendes Transportelement sowie um ein dazu benachbartes, die Behälter linear förderndes, Transportelement handelt. Die Transportelemente können zumindest teilweise als Behälterbehandlungsvorrichtung ausgebildet sein. So kann beispielsweise ein erstes Transportelement ein Füller sein, mittels dem leere Behälter mit einem flüssigen Füllgut befüllt werden. An den Füller kann sich ein weiteres Transportelement in Form eines Transfersterns oder Linearförderers anschließen, mittels dem die gefüllten, jedoch noch offenen Behälter an einen Verschließer, beispielsweise einen Dosenverschließer, weitergefördert werden.

Bei den als Linearförderer ausgebildeten Transportelementen werden die Behälter im Wesentlichen geradlinig oder alternativ auch kurvenförmig und, bevorzugt aber nicht zwingend, im Wesentlichen auch ohne Änderung ihrer Ortshöhe transportiert. Derartige als Linearförderer ausgebildete Transportelemente können auch zwischen zwei als rotative Transportelemente ausgebildeten Transportelementen angeordnet sein.

Bei der Weitergabe der Behälter von einem Transportelement zum in Transportrichtung folgenden Transportelement kommt es daher häufig zu einer Krümmungsänderung in der Bewegungsbahn der Behälter und damit zu einem Wechsel der auf den Behälter wirkenden Zentrifugalkräfte. Bei einem hohen Behälterdurchsatz (Anzahl der geförderten Behälter pro Zeiteinheit) erfährt der Behälter dabei einen Querruck, verursacht durch starke Beschleunigungskräfte bzw. deren abrupte Änderungen, was zum Herausschwappen des Füllguts aus dem Behälter, insbesondere deren Behältermündung, führen kann. Dies ist insbesondere aus hygienischen Gründen, aber auch wegen des Produktverlustes unerwünscht und nachteilig.

In der Praxis wird daher häufig die Gesamtleistung von betroffenen Behälterbehandlungsmaschinen, insbesondere von Behälterfüllmaschinen - insbesondere von Dosenfüllmaschinen - und/oder aber auch von Verschließmaschinen, soweit reduziert, bis ein Überschwappen der offenen Behälter entlang der Transportstrecke gerade nicht mehr auftritt, oder auf ein solche geringes Maß reduziert ist, dass das verbliebene Rest-Überschwappen keine störenden Auswirkungen aufweist.

Letztlich führt diese Vorgehensweise zu erheblichen Leistungsverlusten (abgefüllte Behälter pro Stunde) was aufgrund der damit verbundenen monetären Auswirkungen (der Füller muss in seinem Teilkreis unnötig groß bauen) äußerst unerwünscht ist.

Aus dem Stand der Technik gemäß dem Dokument EP 2 179 960 B1 ist zur Lösung des Problems bekannt, dass Behältergreifer in radialer Richtung verschiebbar am Transportelement vorgesehen sind. Nachteilig an dieser Lösung sind jedoch u.a. die mechanisch komplexen und damit teuren Greifer, welche darüber hinaus ebenfalls einen erhöhten Verschleiß und somit auch Wartungsaufwand aufweisen. Ebenfalls nachteilig an dieser Lösung ist, dass nicht alle bekannten Behältertypen mit Greifern gegriffen werden können, da einige Behälter, wie z.B. Dosen, so lange sie nicht verschlossen sind, mechanisch zu instabil sind, um durch übliche Greifer gegriffen und gehalten zu werden.

Eine Vorrichtung zum Transportieren von Behältern gemäß dem Oberbegriff des Patentanspruchs 1 ist aus der EP 2 987 764 A1 bekannt.

Ausgehend hiervon ist es Aufgabe der Erfindung, eine Vorrichtung und ein Verfahren zum Transportieren von Behältern anzugeben, mittels der/dem ein möglichst querruckfreier Transport der Behälter entlang der Transportstrecke ermöglicht wird.

Die Aufgabe wird durch eine Vorrichtung gemäß den Merkmalen des unabhängigen Patentanspruchs 1 gelöst. Ein entsprechendes Verfahren ist Gegenstand des nebengeordneten Patentanspruchs 16.

Gemäß einem ersten Aspekt bezieht sich die Erfindung auf eine Vorrichtung nach Anspruch 1 zum Transportieren von Behältern auf einer Transportstrecke in einer Transportrichtung. Die Vorrichtung umfasst zumindest ein erstes und ein zweites Transportelement, die über einen Transportstreckenabschnitt entlang der Transportstrecke miteinander verbunden sind. Vorzugsweise weist die Vorrichtung zumindest drei Transportelemente auf. Der Transportstreckenabschnitt weist dabei einen ersten und einen zweiten Transportstreckenabschnitt auf, von denen zumindest der erste und/oder zweite Transportstreckenabschnitt teilkreisförmig ausgebildet ist. Zwischen dem ersten und zweiten Transportstreckenabschnitt ist ein dritter Transportstreckenabschnitt entlang der Transportstrecke vorgesehen. Erfindungsgemäß weist der dritte Transportstreckenabschnitt zumindest einen Übergangskurvenabschnitt mit einer verstellbaren Kurvenbahn auf. In anderen Worten ist also vorgesehen, dass der dritte Transportstreckenabschnitt zumindest in einem Übergangskurvenabschnitt gegenüber den in ihrer jeweiligen Bewegungsbahn nicht veränderlichen ersten und zweiten Transportstreckenabschnitte verstellbar, also veränderbar, ausgebildet ist. Die relative Verstellbarkeit des dritten Transportstreckenabschnittes entlang zumindest eines Übergangskurvenabschnittes gegenüber dem jeweils sich benachbart anschließenden ersten bzw. zweiten Transportstreckenabschnitt ermöglicht eine hohe Flexibilität in der Anpassung der Bewegungsbahn an unterschiedlichste Füllgüter mit unterschiedlichen mechanischen Eigenschaften wie z.B. Zähigkeit, Adhäsionsverhalten, innere Dämpfung der Flüssigkeit, aber auch eine Anpassung an die Leistung (abgefüllte Behälter pro Stunde) der Behälterbehandlungsmaschine und auch an die Form der Behälter mit dem Ziel einer hinsichtlich des Produktverlustes optimierten Bewegungsbahn..

Die Transportstrecke oder die Transportstreckenabschnitte werden zunächst als ideale, theoretische und ggf. mathematisch beschreibbare Mittellinie definiert, die im Wesentlichen der Soll-Bewegungsbahn der Mittelpunkte der auf der Transportstrecke bzw. den Transportstreckenabschnitten bewegten Behältern entspricht.

Ergänzend sollen nachfolgend unter einer Transportstrecke oder einem Transportstreckenabschnitt mit den jeweiligen, auch vorgenannten Übergangskurvenabschnitten eine Art Korridor verstanden werden, in welchem die oben genannte Mittellinie von ihrem optimalen Verlauf abweichen kann. Dabei wird die Breite dieses Korridors durch Grenzkurven begrenzt. Dabei ist mehr im Detail vorgesehen, dass der Abstand der Grenzkurven von der Mittellinie zwischen 2 und 20 mm lotrecht zu jeder Seite der Mittellinie beträgt. Die Gesamtbreite des Korridors beträgt folglich zwischen 4 und 40 mm, bevorzugt zwischen 4 und 20 mm und besonders bevorzugt zwischen 2 und 10 mm. Dabei ist wesentlich, dass eine genauere Annäherung an den optimalen Verlauf eine gleichmäßigere Beförderung der Behälter ermöglicht.

Der wesentliche Vorteil der Vorrichtung besteht darin, dass durch die Verwendung eines einstellbaren Transportstreckenabschnitts eine sprunghafte Änderung der auf den Behälter wirkenden Querbeschleunigung weitestgehend vermieden werden kann. Dadurch kann ein Überschwappen des Füllguts aus dem noch offenen Behälterbevorzugt vollständig vermieden werden.

Erfindungsgemäß ist vorgesehen, dass die Krümmung der Kurvenbahn des zumindest einen Übergangskurvenabschnitts jeweils mittels zumindest einer Verstelleinrichtung motorisch gesteuert- und/oder geregelt einstellbar ausgebildet ist. In einer nicht erfindungsgemäßen Ausführungsform kann alternativ auch eine manuelle Verstellung beispielsweise mittels einer Handkurbel für die jeweilige Verstelleinrichtung erfolgen.

Gemäß einer vorteilhaften Ausführungsvariante kann dabei vorgesehen sein, dass zumindest ein Teilstück der Kurvenbahn und damit eine Länge und/oder zumindest ein Radius und/oder zumindest ein Mittelpunkt des zugehörigen Radius in einer X und/oder Y-Richtung der Krümmung der Kurvenbahn des zumindest einen Übergangskurvenabschnitts mittels der zumindest einen Verstelleinrichtung motorisch einstellbar ausgebildet ist.

Gemäß einer weiteren vorteilhaften Ausführungsvariante kann dabei vorgesehen sein, dass die Behälter zumindest entlang des ersten oder dritten Transportstreckenabschnittes durch Führungsgeländer geführt sind, wobei die durch die Führungsgeländer vorgegebene Kurvenbahn des zumindest einen Übergangskurvenabschnitts mittels der zumindest einen Verstelleinrichtung motorisch einstellbar ausgebildet ist.

Gemäß einer nochmals weiteren vorteilhaften Ausführungsvariante kann dabei vorgesehen sein, dass dem zumindest einen Übergangskurvenabschnitt des dritten Transportstreckenabschnittes jeweils mehrere Verstelleinrichtungen zugeordnet sind, die beabstandet zueinander entlang des zumindest einen Übergangskurvenabschnitts vorgesehen sind.

Erfindungsgemäß ist vorgesehen, dass zumindest eine, über eine Steuer- und Auswerteeinrichtung mit der entsprechenden Verstelleinrichtung elektrisch verbundene Sensoreinrichtung vorgesehen ist, die dazu ausgebildet ist, in einem bevorzugt ortsfesten Erfassungsbereich eine Ist-Schwapphöhe des jeweiligen Behälters zu erfassen und mittels einer in der elektronischen Steuer- und Auswerteeinrichtung hinterlegten Auswertelektronik mit einer dort gespeicherten Soll-Schwapphöhe zu vergleichen und aus einer eventuellen Abweichung ein Signal zu erzeugen und die betreffende Verstelleinrichtungen anzusteuern, um ein an die Abweichung zwischen der Ist-Schwapphöhe und der Soll-Schwapphöhe erforderliches Verstellen zumindest einer Länge und/oder zumindest eines Radius und/oder zumindest eines Mittelpunkt des zugehörigen Radius in einer X und/oder Y- Richtung der Krümmung der Kurvenbahn des zumindest einen Übergangskurvenabschnitts mittels der zumindest einen Verstelleinrichtung zu veranlassen.

Dabei kann mittels der Steuer- und Auswerteeinrichtung das abhängig von der Abweichung zwischen der Ist-Schwapphöhe und der Soll-Schwapphöhe erzeugte Signal auch verwendet werden, um die Leistung (transportierte Behälter pro Zeiteinheit) der Vorrichtung zum Transportieren von Behältern zu verändern, also zu erhöhen und/oder zu verringern. In anderen Worten erfolgt damit also eine Leistungssteuerung und/oder -regelung in Abhängigkeit der mittels der zumindest einen Sensoreinrichtung erfassten Ist-Schwapphöhe.

Besonders vorteilhaft kann die Ist-Schwapphöhe an allen Bereichen entlang des Transportweges der Behälter erfasst werden, an denen es zu einem Schwappen bzw. Überschappen derselben kommen kann. Dazu kann die Anordnung eines oder aber auch mehrerer, die Ist-Schwapphöhe erfassenden Sensoreinrichtungen vorgesehen sein.

Durch diese Vorgehensweise wird es ermöglicht, durch die Überwachung aller kritischen Schwappstellen die Gesamtleistung der Vorrichtung zum Transportieren von Behältern möglichst in ihrem Leistungsmaximum (transportierte Behälter pro Zeiteinheit) zu fahren.

Dabei sind im Wesentlichen die folgenden Fälle zu unterscheiden:

Beispielsweise kann die Vorrichtung zum Transportieren von Behältern zunächst mit einer Transportleistung gestartet werden, die niedriger ausgebildet ist, als deren mögliche Maximalleistung (transportierte Behälter pro Zeiteinheit) und hierbei die Ist-Schwapphöhe mittels der zumindest einen Sensoreinrichtung erfasst werden. Dabei kann dann abhängig von dem von der Abweichung zwischen der Ist-Schwapphöhe und der Soll-Schwapphöhe erzeugten Signal die Leistung (transportierte Behälter pro Zeiteinheit) der Vorrichtung so lange verändert, insbesondere erhöht, werden, bis die Ist-Schwapphöhe der Soll-Schwapphöhe entspricht. Im Anschluss daran kann eine Verstellung der Krümmung der Kurvenbahn des zumindest einen Übergangskurvenabschnitts mittels der zumindest einen Verstelleinrichtung in der oben näher beschriebenen Art und Weise erfolgen. Vorzugsweise werden diese beiden Schritte in einem Iterationsverfahren wiederholt vorgenommen und dabei nach jedem Durchlaufen einer Iterationsschleife die Leistung der Vorrichtung gesteigert, so dass man sich möglichst der Maximalleistung der Vorrichtung (transportierte Behälter pro Zeiteinheit) annähert.

Alternativ kann auch vorgesehen sein, dass zunächst mit einer Leistung der Vorrichtung zum Transportieren von Behältern gestartet werden, die niedriger ausgebildet ist, als deren mögliche Maximalleistung (transportierte Behälter pro Zeiteinheit) und hierbei die Ist-Schwapphöhe mittels der zumindest einen Sensoreinrichtung erfasst werden. Hierbei wird zunächst eine Verstellung der Krümmung der Kurvenbahn des zumindest einen Übergangskurvenabschnitts mittels der zumindest einen Verstelleinrichtung in der oben näher beschrieben Art und Weise vorgenommen und im Anschluss daran kann dann abhängig von dem von der Abweichung zwischen der Ist-Schwapphöhe und der Soll-Schwapphöhe erzeugten Signal die Leistung (transportierte Behälter pro Zeiteinheit) der Vorrichtung zum Transportieren von Behältern so lange verändert, insbesondere erhöht, werden, bis die Ist-Schwapphöhe der Soll-Schwapphöhe entspricht. Vorzugsweise werden auch diese beiden Schritte in einem Iterationsverfahren wiederholt vorgenommen und dabei nach jedem Durchlaufen einer Iterationsschleife die Leistung der Vorrichtung gesteigert, so dass man sich möglichst der Maximalleistung der Vorrichtung (transportierte Behälter pro Zeiteinheit) annähert.

Gemäß einer nochmals weiteren vorteilhaften Ausführungsvariante kann dabei vorgesehen sein, dass der dritte Transportstreckenabschnitt einen ersten und zweiten Übergangskurvenabschnitt aufweist, die jeweils eine separat und unabhängig voneinander einstellbare Kurvenbahn aufweisen.

Gemäß einer nochmals weiteren vorteilhaften Ausführungsvariante kann dabei vorgesehen sein, dass eine erste Länge und/oder ein erster Radius und/oder ein erster Mittelpunkt des zugehörigen ersten Radius in einer X und/oder Y- Richtung der Krümmung der Kurvenbahn des ersten Übergangskurvenabschnitts mittels zumindest einer ersten Verstelleinrichtung motorisch einstellbar ausgebildet ist. Auch eine zweite Länge und/oder ein zweiter Radius und/oder ein zweiter Mittelpunkt des zugehörigen zweiten Radius kann in einer X und/oder Y- Richtung der Krümmung der Kurvenbahn des zweiten Übergangskurvenabschnitts mittels zumindest einer zweiten Verstelleinrichtung motorisch einstellbar ausgebildet sein.

Gemäß einer nochmals weiteren vorteilhaften Ausführungsvariante kann dabei vorgesehen sein, dass der dritte Transportstreckenabschnitt einen ersten, einen zweiten sowie einen dritten Übergangskurvenabschnitt aufweist, die jeweils eine separat und unabhängig voneinander einstellbare Kurvenbahn aufweisen.

Gemäß einer nochmals weiteren vorteilhaften Ausführungsvariante kann dabei vorgesehen sein, dass eine dritte Länge und/oder ein dritter Radius und/oder ein dritter Mittelpunkt des zugehörigen dritten Radius in einer X und/oder Y- Richtung der Krümmung der Kurvenbahn des dritten Übergangskurvenabschnitts mittels zumindest einer dritten Verstelleinrichtung motorisch einstellbar ausgebildet ist.

Gemäß einem Ausführungsbeispiel ist der zumindest eine Übergangskurvenabschnitt ein Klothoidenabschnitt und durch folgende Formeln beschrieben:

$$A = \sqrt{2 \cdot TW \cdot R^2};$$

$$KL = \frac{A^2}{R};$$

wobei A ein Klothoidenparameter, TW der Tangentenwinkel, R der Klothoidenradius und KL die Klothoidenlänge sind.

Gemäß einem Ausführungsbeispiel ist der Klothoidenparameter A im Bereich zwischen 125 mm und 250 mm, insbesondere im Bereich zwischen 150 mm und 200 mm, besonders bevorzugt im Bereich zwischen 170 mm und 180 mm gewählt. Dadurch kann bei üblichen Transportelementdurchmessern, beispielsweise im Bereich zwischen 1 m und 5 m, eine querruckfreie oder zumindest querruckreduzierte Übergabe der Behälter erreicht werden.

Gemäß einem Ausführungsbeispiel ist der Tangentenwinkel TW im Bereich zwischen 0,06 rad und 0,5 rad, insbesondere im Bereich zwischen 0,1 rad und 0,4 rad, besonders bevorzugt zu 0,2 rad gewählt. Dadurch kann durch einen räumlich begrenzten Hub des Behältergreifers und einen begrenzten Achsabstand der Transportelemente zueinander eine querruckfreie oder querruckarme Übergabe der Behälter erreicht werden.

Gemäß einem Ausführungsbeispiel liegt die Klothoidenlänge KL im Bereich zwischen 50 mm und 250 mm, insbesondere im Bereich zwischen 100 mm und 200 mm. Auch dies führt zu einer möglichst querruckfreien oder zumindest querruckarmen Übergabe der Behälter zwischen den Transportelementen ohne übermäßige geometrische Veränderungen der Transportstrecke bzw. der Transportvorrichtung an sich.

Bei einer alternativen Ausführungsform, ist der Übergangskurvenabschnitt als sogenannter Blossbogen ausgeführt, bei welcher der Krümmungsverlauf durch ein kubisches Polynom definiert ist, welches tangential von einer Krümmung in die andere übergeht. Der Übergangskurvenabschnitt, im Folgenden auch als Übergangsbogen bezeichnet, weist dabei einen Übergangsbogenanfang (ÜA) und ein Übergangsbogenende (ÜE) auf. Die Krümmung k zwischen dem Übergangsbogenanfang mit der Krümmung Null und dem Übergangsbogenende mit der Krümmung des darauffolgenden anschließenden Radius eines Anschlusskreisbogens ist wie folgt definiert:

$$k = \frac{3}{R \cdot L^2} \cdot l^2 - \frac{2}{R \cdot L^3} \cdot l^3$$

Hierbei sind:

R: der Radius des Anschlusskreisbogens;

l: die Zwischenlänge des Übergangsbogenabschnitts von ÜA betrachtet;

L, die Gesamtlänge des Übergangsbogens;

Sind zwei Übergangskurvenabschnitte direkt oder mittelbar miteinander verbunden, kann bei einer alternativen Ausführungsform der eine Übergangskurvenabschnitt mathematisch unterschiedlich zu dem anderen ausgeformt sein, indem beispielsweise ein Blossbogen/- abschnitt sich direkt oder nach einer Geradeführung an einen gegensinnigen Blossbogen/- abschnitt anschließt. Auch sind im dritten Transportstreckenabschnitt Kombinationen aus einem Blossbogen bzw. Blossbogenabschnitt und einem Klothoidenabschnitt denkbar.

Unter "Klothoide" im Sinne der Erfindung wird eine Kurve verstanden, deren Krümmung stetig linear zunimmt. Dabei bildet das Produkt aus Kurvenradius und Bogenlänge der Kurve eine Konstante. In anderen Worten ist die Krümmung an jeder Stelle der Kurve proportional zur Länge ihres Bogens bis zu dieser Stelle.

Unter "Behälter" im Sinne der Erfindung werden jedwede Behälter verstanden, insbesondere Flaschen, Dosen, Becher etc., jeweils aus Metall, Glas und/oder Kunststoff, vorzugsweise aus PET (Polyethylenterephthalat).

Der Ausdruck "im Wesentlichen" bzw. "etwa" bedeutet im Sinne der Erfindung Abweichungen vom jeweils exakten Wert um höchstens +/- 10%, bevorzugt um höchstens +/- 5%, und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert.

Es zeigen:

Fig. 1    beispielhaft und grob schematisch eine Transportvorrichtung mit mehreren Transportelementen umlaufender Bauart in einer oberseitigen Darstellung;

Fig. 2    beispielhaft der Verlauf der Transportstrecke im Übergabebereich eines Behälters zwischen einem ersten und zweiten Transportelement;

Fig. 3    beispielhaft ein weiterer Verlauf der Transportstrecke im Übergabebereich eines Behälters zwischen einem ersten und zweiten Transportelement;

Fig. 4    beispielhaft der Verlauf der Zentrifugalbeschleunigung beim Durchlauf eines Behälters durch den Übergabebereich zwischen einem ersten und zweiten Transportelement;

Fig. 5    beispielhaft und analog zur Figur 3 der Verlauf der Transportstrecke im Übergabebereich eines Behälters zwischen einem ersten und zweiten Transportelement wobei dieser Übergabebereich zwei Blossbogenabschnitte aufweist; und

Fig. 6    beispielhaft der Verlauf der Transportstrecke im Übergabebereich eines Behälters zwischen einem ersten und einem nicht dargestellten zweiten Transportelement.

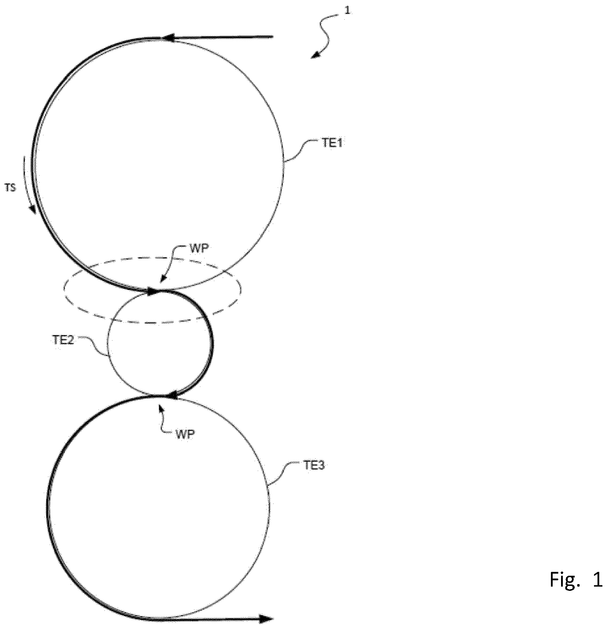

In Figur 1 ist beispielshaft und grob schematisch eine Vorrichtung 1 (nachfolgend auch als Transportvorrichtung bezeichnet) gezeigt, mittels der Behälter 2 auf einer mehrfach umgelenkten Transportstrecke TS gefördert werden. Die Vorrichtung 1 umfasst mehrere Transportelemente, und zwar im gezeigten Ausführungsbeispiel ein erstes Transportelement TE1, ein in Transportrichtung A an das erste Transportelement TE1 anschließendes zweites Transportelement TE2 und ein an das zweite Transportelement TE2 in Transportrichtung A wiederum anschließendes drittes Transportelement TE3. Die Transportelemente TE1 - TE3 sind beispielsweise rotativ angetriebene Transportelemente, d.h. die Transportelemente TE1 - TE3 werden jeweils um eine vertikale Maschinenachse umlaufend angetrieben. An den Transportelementen TE1 - TE3 sind umfangsseitig jeweils Behälterfixiermittel, beispielsweise in Form von Behälteraufnahmen oder Greifern vorgesehen, durch die der jeweilige Behälter 2 während dessen Transport an dem jeweiligen Transportelement TE1 - TE3 gehalten wird. Die Transportelemente TE1 - TE3 können teilweise zur Behälterbehandlung ausgebildet sein. Beispielsweise kann das erste Transportelement TE1 ein Füller, insbesondere ein Dosenfüller sein, an dem leere Behälter, insbesondere Dosen, mit einem Füllgut befüllt werden. Das dritte Transportelement TE3 kann beispielsweise ein Verschließer sein, mit dem Verschlusselement, beispielsweise Schraubverschlüsse oder Kronkorken auf die Behältermündung aufgebracht werden, um die Behälteröffnung zu verschließen. Das zwischen dem ersten und dritten Transportelement TE1, TE3 angeordnete zweite Transportelement TE2 kann beispielsweise ein Transferstern sein, an dem keine Behälterbehandlung stattfindet, sondern mit dem die gefüllten aber noch offenen Behälter 2 an das Transportelement TE3 übergeben werden. Es versteht sich, dass die vorliegende Erfindung auf dieses Ausführungsbeispiel nicht beschränkt ist, sondern eine Vielzahl von Einsatzmöglichkeiten bei Vorrichtungen zur Behälterbehandlung bestehen. Insbesondere kann das zweite Transportelement TE2 auch als Linearförderer ausgebildet sein, mittels dem die Behälter 2 im Wesentlichen geradlinig oder alternativ auch kurvenförmig entlang der Transportstrecke TS transportiert werden.

Wie in Figur 1 zu erkennen, ist die Transportstrecke TS, auf der die Behälter 2 gefördert werden, beispielsweise mehrfach umgelenkt. Insbesondere weist die Transportstrecke TS mehrere kreisbogenförmig oder im Wesentlichen kreisbogenförmig ausgebildete Transportstreckenabschnitte auf. Zwischen diesen Transportstreckenabschnitten befinden sich Wendepunkte WP, an denen sich das Krümmungsverhalten der Transportstrecke TS wesentlich ändert, beispielsweise von einer linkskurvenartigen Krümmung in eine rechtskurvenartige Krümmung oder umgekehrt. Diese Änderung des Krümmungsverhaltens wird auch als Bogenwechsel bezeichnet. An diesen Wendepunkten WP tritt nachteiligerweise ein Querruck am Behälter 2 auf, der beispielsweise bei gefüllten aber noch nicht verschlossenen Behältern 2 dazu führen kann, dass Füllgut aus der noch offenen Behälteröffnung schwappt.

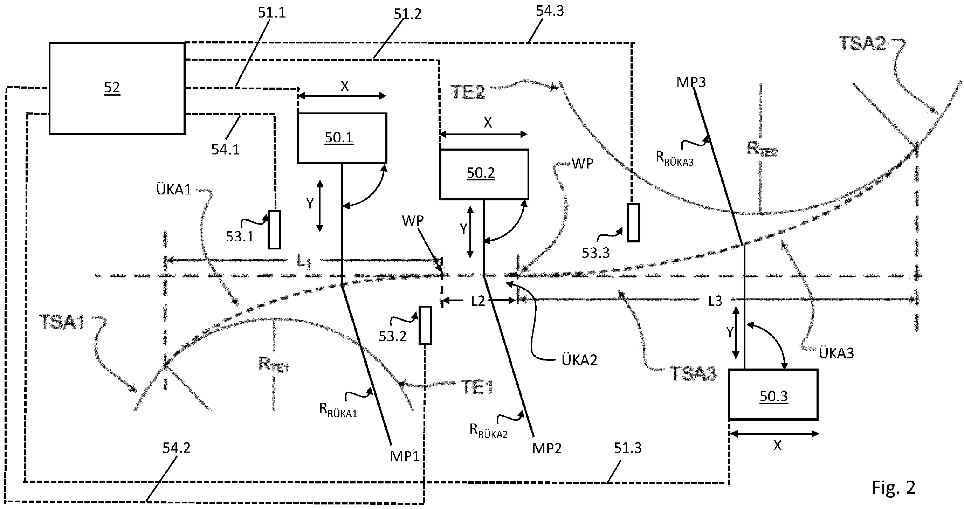

In Figur 2 ist ausschnittsweise ein Ausschnitt der Transportstrecke TS der Figur 1 im Bereich des gestrichelt eingezeichneten Ovals gezeigt, d.h. ein Ausschnitt der Transportstrecke TS im Übergabebereich zwischen dem ersten und zweiten Transportelement TE1, TE2 mit einem ersten, einem zweiten und einem dritten Übergangkurvenabschnitt ÜKA1, ÜKA2, ÜKA3. Die vorliegende Erfindung ist jedoch nicht auf die beispielhaft gezeigte Ausführungsvariante mit drei Übergangskurvenabschnitten ÜKA1, ÜKA2, ÜKA3 beschränkt. Die Transportstrecke TS weist in diesem Ausschnitt Transportstreckenabschnitt TSA einen ersten Transportstreckenabschnitt TSA1, einen zweiten Transportstreckenabschnitt TSA2 und einen zwischen dem ersten und zweiten Transportstreckenabschnitt TSA1, TSA2 liegenden dritten Transportstreckenabschnitt TSA3 auf. In anderen Worten sind also das erste und zweite Transportelement TE1, TE2 über den Transportstreckenabschnitt TSA bestehend aus dem ersten, zweiten und dritten Transportstreckenabschnitt TSA1, TSA2, TSA3 miteinander verbunden. Der erste Transportstreckenabschnitt TSA1 und der zweite Transportstreckenabschnitt TSA2 weisen insbesondere eine Kreisbogenform auf, d.h. die Krümmung des Kurvenverlaufs der Transportstrecke TS in diesem ersten bzw. zweiten Transportstreckenabschnitt TSA1, TSA2 ist konstant oder nahezu konstant. Jedoch sind die Krümmung und die Krümmungsrichtung unterschiedlich. Bei Betrachtung in Transportrichtung der Behälter ist der erste Transportstreckenabschnitt TSA1 im gezeigten Ausführungsbeispiel linksgekrümmt und der zweite Transportstreckenabschnitt TSA2 rechtsgekrümmt ausgebildet. Der Krümmungsradius entlang des ersten und zweiten Transportstreckenabschnitts TSA1, TSA2 entspricht dabei einem jeweiligen Radius $R_{TE1}$, $R_{TE2}$ des zugehörigen Transportelementes TE1, TE2, auf dem die Behälter 2 befördert werden. In anderen Worten weist also die Transportstrecke TS entlang des ersten Transportstreckenabschnittes TSA1 einen Krümmungsradius auf, der dem Radius $R_{TE1}$ des ersten Transportelementes TE1 entspricht, und entlang des zweiten Transportstreckenabschnittes TSA2 einen Krümmungsradius, der dem Radius $R_{TE2}$ des zweiten Transportelementes TE2 entspricht. Die Radien $R_{TE1}$, $R_{TE2}$ sind damit durch den jeweiligen Krümmungsradius des entsprechenden Transportelementes TE1, TE2 vorgegeben und somit nicht veränderbar oder einstellbar.

Um dabei den Querruck zu verringern bzw. im Wesentlichen zu vermeiden, weist die Transportstrecke TS im Übergabebereich zwischen dem ersten und zweiten Transportstreckenabschnitt TSA1, TSA2 den dritten Transportstreckenabschnitt TSA3 auf, der erfindungsgemäß zumindest einen Überganskurvenabschnitt ÜKA1, ÜKA2, ÜKA3 mit einer verstellbaren Kurvenbahn aufweist.

In anderen Worten ist also vorgesehen, dass der dritte Transportstreckenabschnitt TSA3 in dem zumindest einem Übergangskurvenabschnitt ÜKA1, ÜKA2, ÜKA3 gegenüber den in ihrer jeweiligen Bewegungsbahn nicht veränderlichen ersten und zweiten Transportstreckenabschnitte TSA1, TSA2 verstellbar, also veränderbar, ausgebildet ist. Die relative Verstellbarkeit des dritten Transportstreckenabschnittes TSA3 entlang des zumindest einen Übergangskurvenabschnittes ÜKA1, ÜKA2, ÜKA3 gegenüber dem jeweils sich benachbart anschließenden ersten bzw. zweiten Transportstreckenabschnitt TSA1, TSA2 ermöglicht eine hohe Flexibilität in der Anpassung der erfindungsgemäßen Vorrichtung an unterschiedlichste Füllgüter mit unterschiedlichen mechanischen Eigenschaften wie z.B. Zähigkeit, Adhäsionsverhalten, innere Dämpfung der Flüssigkeit, aber auch eine Anpassung an die Leistung (Abgefüllte Behälter pro Stunde) der Behälterbehandlungsmaschine.

Erfindungsgemäß ist dabei die Krümmung der Kurvenbahn des zumindest einen Übergangskurvenabschnitts ÜKA1, ÜKA2, ÜKA3 mittels zumindest einer Verstelleinrichtung 50.1, 50.2, 50.3 motorisch gesteuert- und/oder geregelt einstellbar ausgebildet. Insbesondere kann dabei zumindest eine Länge L1, L2, L3 und/oder zumindest ein Radius $R_{ÜKA1, ÜKA2, ÜKA3}$ und/oder zumindest ein Mittelpunkt MP1, MP2, MP3 des zugehörigen Radius $R_{ÜKA1, ÜKA2, ÜKA3}$ in einer X und/oder Y- Richtung der Krümmung der Kurvenbahn des zumindest einen Übergangskurvenabschnitts ÜKA1, ÜKA2, ÜKA3 mittels der zumindest einen Verstelleinrichtung 50.1, 50.2, 50.3 motorisch einstellbar ausgebildet sein.

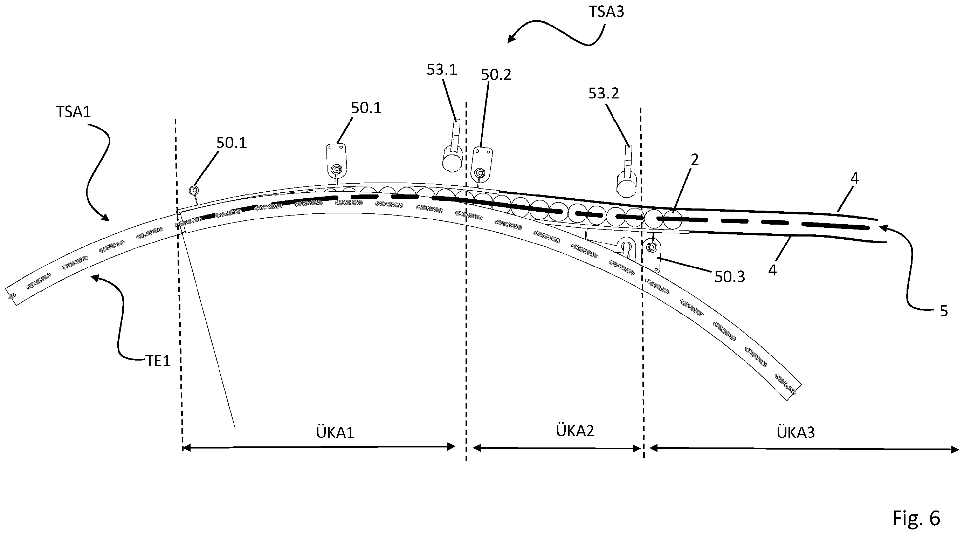

Wie insbesondere in der Figur 6 erkennbar, sind die Behälter 2 während ihres Transports zumindest entlang des dritten Transportstreckenabschnittes TSA3 der Transportstrecke TS in einer durch beidseitig mittels Führungsgeländern 4 begrenzten Gasse 5 geführt, die die Kurvenbahn des zumindest einen Übergangskurvenabschnittes ÜKA1, ÜKA2, ÜKA3 vorgibt. Mehr im Detail bildet sich zwischen dem äußeren und inneren Führungsgeländer 4 eine Gasse 5 aus, in der die Behälter 2 zumindest entlang des dritten Transportstreckenabschnittes TSA3 und damit entlang des zumindest einen Übergangskurvenabschnittes ÜKA1, ÜKA2, ÜKA3 der Transportstrecke TS geführt sind. Dabei ist die durch die Führungsgeländer 4 vorgegebene Kurvenbahn des zumindest einen Übergangskurvenabschnittes ÜKA1, ÜKA2, ÜKA3 mittels der zumindest einen Verstelleinrichtung 50.1, 50.2, 50.3 motorisch einstellbar ausgebildet. Hierfür kann die zumindest eine Verstelleinrichtung 50.1, 50.2, 50.3 eine Exzentereinrichtung aufweisen, die die durch die Führungsgeländer 4 vorgegebene Kurvenbahn des zumindest einen Übergangskurvenabschnittes ÜKA1, ÜKA2, ÜKA3 zumindest entlang des dritten Transportstreckenabschnittes TSA3 motorisch einstellt, indem die Führungsgeländer 4 relativ zueinander bewegt werden, so dass damit zumindest eine Länge L1, L2, L3 und/oder zumindest ein Radius $R_{ÜKA1, ÜKA2, ÜKA3}$ und/oder zumindest ein Mittelpunkt MP1, MP2, MP3 des zugehörigen Radius $R_{ÜKA1, ÜKA2, ÜKA3}$ in einer X und/oder Y- Richtung der Krümmung der Kurvenbahn des zumindest einen Übergangskurvenabschnitts ÜKA1, ÜKA2, ÜKA3 verändert wird.

Anstelle der Exentereinrichtung kann die zumindest eine Verstelleinrichtung 50.1, 50.2, 50.3 auch mittels einer Gelenkeinrichtung eine Stellbewegung auf die Führungsgeländer 4 zur Einstellung der zumindest eine Länge L1, L2, L3 und/oder des zumindest ein Radius $R_{ÜKA1, ÜKA2, ÜKA3}$ und/oder des zumindest einen Mittelpunktes MP1, MP2, MP3 des zugehörigen Radius $R_{ÜKA1, ÜKA2, ÜKA3}$ in einer X und/oder Y- Richtung der Krümmung der Kurvenbahn des zumindest einen Übergangskurvenabschnitts ÜKA1, ÜKA2, ÜKA3 einleiten. Ferner kann die zumindest eine Verstelleinrichtung 50.1, 50.2, 50.3 auch als Linearaktor ausgebildet sein.

Dabei kann vorgesehen sein, dass dem zumindest einem Übergangskurvenabschnitt ÜKA1, ÜKA2, ÜKA3 des dritten Transportstreckenabschnittes TSA3 mehrere Verstelleinrichtungen 50.1, 50.2, 50.3 zugeordnet sind, die beabstandet zueinander entlang des zumindest einen Übergangskurvenabschnitts ÜKA1, ÜKA2, ÜKA3 vorgesehen sind.

Ferner kann die wenigstens eine Verstelleinrichtungen 50.1, 50.2, 50.3 über eine Steuerleitung 51.1, 51.2, 51.3 mit einer Steuer- und Auswerteeinrichtung 52 elektrisch verbunden und mittels dieser steuer- und/oder regelbar ausgebildet sein. Zudem ist bevorzugt eine erste Sensoreinrichtung 53.1, 53.2, 53.3 vorgesehen, die ortsfest im Bereich des dritten Transportstreckenabschnittes TSA3 angeordnet ist.

Die zumindest eine Sensoreinrichtung 53.1, 53.2, 53.3 ist dabei als vorzugsweise optische Sensoreinrichtung, beispielweise Video-Kamera, ausbildet und über eine entsprechende Signalleitung 54.1, 54.2, 54.3 ebenfalls elektrisch mit der elektronischen Steuer- und Auswerteeinrichtung 52 verbunden. Dabei weist die zumindest eine Sensoreinrichtung 53.1, 53.2, 53.3 jeweils einen ortsfesten Erfassungsbereich, vorzugsweise einen ortsfesten Bilderfassungsbereich, auf, mittels dem das Erreichen einer Ist-Schwapphöhe IH entlang dritten Transportstreckenabschnittes TSA3 an dem jeweiligen Behälter 2 erfasst werden kann. Vorzugsweise ist dabei der Erfassungsbereich derart eingestellt, dass die Ist-Schwapphöhe IH von mehreren, beispielsweise vier, Behältern 2 gleichzeitig erfasst werden kann.

Erfindungsgemäß ist die zumindest eine Sensoreinrichtung 53.1, 53.2, 53.3 dazu ausgebildet , im ortsfesten Erfassungsbereich eine Ist-Schwapphöhe IH des jeweiligen Behälters 2 zu erfassen und mittels einer in der elektronischen Steuer- und Auswerteeinrichtung 52 hinterlegten Auswertelektronik mit einer dort gespeicherten Soll-Schwapphöhe SH zu vergleichen und aus einer eventuellen Abweichung ein Signal zu erzeugen, welches die elektronischen Steuer- und Auswerteeinrichtung 52 über eine Steuerleitung 51.1, 51.2, 51.3 der betreffende Verstelleinrichtungen 50.1, 50.2, 50.3 anzusteuern, um ein an die Abweichung zwischen der Ist-Schwapphöhe IH und der Soll-Schwapphöhe SH erforderliches Verstellen zumindest einer Länge L1, L2, L3 und/oder zumindest eines Radius $R_{ÜKA1, ÜKA2, ÜKA3}$ und/oder zumindest eines Mittelpunkt MP1, MP2, MP3 des zugehörigen Radius $R_{ÜKA1, ÜKA2, ÜKA3}$ in einer X und/oder Y- Richtung der Krümmung der Kurvenbahn des zumindest einen Übergangskurvenabschnitts ÜKA1, ÜKA2, ÜKA3 mittels der zumindest einen Verstelleinrichtung 50.1, 50.2, 50.3 zu veranlassen.

Dabei kann mittels der Steuer- und Auswerteeinrichtung das abhängig von der Abweichung zwischen der Ist-Schwapphöhe und der Soll-Schwapphöhe erzeugte Signal auch verwendet werden, um die Leistung (transportierte Behälter pro Zeiteinheit) der Vorrichtung zum Transportieren von Behältern zu verändern, also zu erhöhen und/oder zu erniedrigen. In anderen Worten erfolgt damit also eine Leistungssteuerung in Abhängigkeit der mittels der zumindest einen Sensoreinrichtung erfassten Ist-Schwapphöhe.

Besonders vorteilhaft kann die Ist-Schwapphöhe an allen Bereichen entlang des Transportweges der Behälter erfasst werden, an denen es zu einem Schwappen bzw. Überschappen derselben kommen kann. Dazu kann die Anordnung eines oder aber auch mehrerer, die Ist-Schwapphöhe erfassenden Sensoreinrichtungen vorgesehen sein.

Durch diese Vorgehensweise wird es ermöglicht, durch die Überwachung aller kritischen Schwappstellen die Gesamtleistung der Vorrichtung zum Transportieren von Behältern möglichst in ihrem Leistungsmaximum (transportierte Behälter pro Zeiteinheit) zu fahren.

Dabei sind im Wesentlichen die folgenden Fälle zu unterscheiden:

Beispielsweise kann die Vorrichtung zum Transportieren von Behältern zunächst mit einer Transportleistung gestartet werden, die niedriger ausgebildet ist, aus deren mögliche Maximalleistung (transportierte Behälter pro Zeiteinheit) und hierbei die Ist-Schwapphöhe mittels der zumindest einen Sensoreinrichtung erfasst werden. Dabei kann dann abhängig von dem von der Abweichung zwischen der Ist-Schwapphöhe und der Soll-Schwapphöhe erzeugten Signal die Leistung (transportierte Behälter pro Zeiteinheit) der Vorrichtung so lange verändert, insbesondere erhöht, werden, bis die Ist-Schwapphöhe der Soll-Schwapphöhe entspricht. Im Anschluss daran kann eine Verstellung der Krümmung der Kurvenbahn des zumindest einen Übergangskurvenabschnitts mittels der zumindest einen Verstelleinrichtung in der oben näher beschrieben Art und Weise erfolgen. Vorzugsweise werden diese beiden Schritte in einem Iterationsverfahren wiederholt vorgenommen und dabei nach jedem Durchlaufen einer Iterationsschleife die Leistung der Vorrichtung gesteigert, so dass man sich möglichst der Maximalleistung der Vorrichtung (transportierte Behälter pro Zeiteinheit) annähert.

Alternativ kann auch vorgesehen sein, dass zunächst mit einer Leistung der Vorrichtung zum Transportieren von Behältern gestartet werden, die niedriger ausgebildet ist, aus deren mögliche Maximalleistung (transportierte Behälter pro Zeiteinheit) und hierbei die Ist-Schwapphöhe mittels der zumindest einen Sensoreinrichtung erfasst werden. Hierbei wird zunächst eine Verstellung der Krümmung der Kurvenbahn des zumindest einen Übergangskurvenabschnitts mittels der zumindest einen Verstelleinrichtung in der oben näher beschrieben Art und Weise vorgenommen und im Anschluss daran kann dann abhängig von dem von der Abweichung zwischen der Ist-Schwapphöhe und der Soll-Schwapphöhe erzeugten Signal die Leistung (transportierte Behälter pro Zeiteinheit) der Vorrichtung zum Transportieren von Behältern so lange verändert, insbesondere erhöht, werden, bis die Ist-Schwapphöhe der Soll-Schwapphöhe entspricht. Vorzugsweise werden auch diese beiden Schritte in einem Iterationsverfahren wiederholt vorgenommen und dabei nach jedem Durchlaufen einer Iterationsschleife die Leistung der Vorrichtung gesteigert, so dass man sich möglichst der Maximalleistung der Vorrichtung (transportierte Behälter pro Zeiteinheit) annähert.

Dabei kann vorgesehen sein, dass der dritte Transportstreckenabschnitt TSA3 einen ersten und zweiten Übergangskurvenabschnitt ÜKA1, ÜKA2 aufweist, die jeweils eine separat und unabhängig voneinander einstellbare Kurvenbahn aufweisen. In anderen Worten ist also der dritte Transportstreckenabschnitt TSA3 in dieser Ausführungsvariante in zwei Übergangskurvenabschnitte ÜKA1, ÜKA2 aufgeteilt, die jeweils eine unabhängig voneinander einstallbare Kurvenbahn ausbilden.

Insbesondere kann dabei eine erste Länge L1 und/oder ein erster Radius $R_{ÜKA1}$ und/oder ein erster Mittelpunkt MP1, MP2, MP3 des zugehörigen ersten Radius $R_{ÜKA1}$ in einer X- und/oder Y- Richtung der Krümmung der Kurvenbahn des ersten Übergangskurvenabschnitts ÜKA1 mittels zumindest einer ersten Verstelleinrichtung 50.1 motorisch einstellbar ausgebildet sein und eine zweite Länge L2 und/oder ein zweiter Radius $R_{ÜKA2}$ und/oder ein zweiter Mittelpunkt MP2 des zugehörigen zweiten Radius $R_{ÜKA2}$ in einer X und/oder Y- Richtung der Krümmung der Kurvenbahn des zweiten Übergangskurvenabschnitts ÜKA2 mittels zumindest einer zweiten Verstelleinrichtung 50.2 motorisch einstellbar ausgebildet sein.

Auch kann vorgesehen sein, dass der dritte Transportstreckenabschnitt TSA3 einen ersten, einen zweiten sowie einen dritten Übergangskurvenabschnitt ÜKA1, ÜKA2, ÜKA3 aufweist, die jeweils eine separat und unabhängig voneinander einstellbare Kurvenbahn aufweisen. Die von den jeweiligen Übergangskurvenabschnitten ÜKA1, ÜKA2, ÜKA3 ausgebildeten Kurvenbahnen sind dabei unabhängig voneinander verstellbar, also veränderbar.

Insbesondere kann hierfür eine dritte Länge L3 und/oder ein dritter Radius $R_{ÜKA3}$ und/oder ein dritter Mittelpunkt MP3 des zugehörigen dritten Radius $R_{ÜKA3}$ in einer X und/oder Y-Richtung der Krümmung der Kurvenbahn des dritten Übergangskurvenabschnitts ÜKA3 mittels zumindest einer dritten Verstelleinrichtung 50.3 motorisch einstellbar ausgebildet sein.

Besonders vorteilhaft sind der erste und/oder zweite und/oder dritte Übergangskurvenabschnitt ÜKA1, ÜKA2, ÜKA3 mit einer unterschiedlich zueinander ausgebildeten Länge L1, L2, L3 und/oder Radius $R_{ÜKA1, ÜKA2, ÜKA3}$ und/oder Mittelpunkt MP1, MP2, MP3 des zugehörigen Radius $R_{ÜKA1, ÜKA2, ÜKA3}$ in einer X und/oder Y- Richtung der Krümmung der Kurvenbahn eingestellt.

Weiterhin vorteilhaft ist zumindest ein Übergangskurvenabschnitt ÜKA1, ÜKA2, ÜKA3 des dritten Transportstreckenabschnitts TSA3 als Klothoidenabschnitt und/oder Blossbogenabschnitt ausgebildet, dessen Verlauf klothoidenförmig bzw. blossbogenförmig gewählt ist.

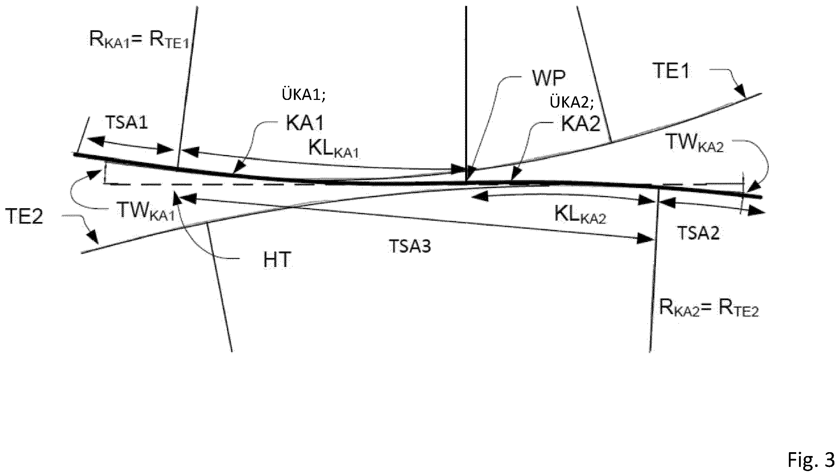

Der dritte Transportstreckenabschnitts TSA3 weist im gezeigten Ausführungsbeispiel der Figur 3 zwei Klothoidenabschnitte KA1, KA2 auf. Hierbei ist der erste Übergangskurvenabschnitt ÜKA1 als Klothoidenabschnitt KA1 und der zweite Übergangskurvenabschnitt ÜKA2 als Klothoidenabschnitt KA2 ausgebildet. Die Klothoidenabschnitte KA1, KA2 bilden dabei jeweils Segmente einer Klothoide, um eine möglichst querruckfreie Übergabe zwischen dem ersten und zweiten Transportelement TE1, TE2 erreichen zu können.

Im gezeigten Ausführungsbeispiel der Figur 3 schließt der erste Klothoidenabschnitt KA1 unmittelbar an den ersten Transportstreckenabschnitt TSA1 an und endet nach einer Klothoidenlänge $KL_{KA1}$ an einem Wendepunkt WP, an dem ein Krümmungswechsel der Transportstrecke TS stattfindet, d.h. die Krümmung der Transportstrecke TS ändert sich beispielsweise von linksgekrümmt auf rechtsgekrümmt. An diesen Wendepunkt WP schließt sich der zweite Klothoidenabschnitt KA2 an, der nach einer Klothoidenlänge $KL_{KA2}$ in den zweiten Transportstreckenabschnitt TSA2 übergeht.

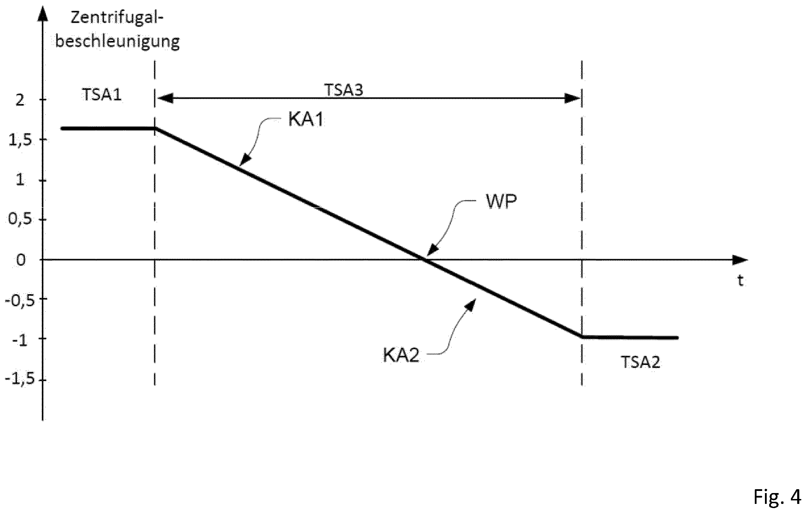

Fig. 4 zeigt den Verlauf der auf einen Behälter 2 wirkenden Zentrifugalbeschleunigung über der Zeit beim Durchlauf des Behälters 2 durch den in Fig. 3 gezeigten Ausschnitt der Transportstrecke TS. In den Transportstreckenabschnitten TSA1, TSA2 ist der Wert der Zentrifugalbeschleunigung jeweils konstant. Jedoch ist die Zentrifugalbeschleunigung in diesen Transportstreckenabschnitten TSA1, TSA2 entgegengesetzt gerichtet und in diesem Beispiel von einem anderen Betrag, was sich durch den Vorzeichenunterschied der Zentrifugalbeschleunigungswerte und die Zahlenwerte ausdrückt. Die Klothoidenabschnitte KA1, KA2 sind derart ausgebildet bzw. dimensioniert, dass sich die Zentrifugalbeschleunigung im dritten Transportstreckenabschnitt TSA3 vorzugsweise linear oder im Wesentlichen linear von dem Zentrifugalbeschleunigungswert im Bereich des ersten Transportstreckenabschnitts TSA1 auf den Zentrifugalbeschleunigungswert im Bereich des zweiten Transportstreckenabschnitts TSA2 ändert. Dadurch kann eine Übergabe des Behälters vom ersten Transportelement TE1 an das zweite Transportelement TE2 mit deutlich reduziertem Querruck erfolgen.

Die Klothoidenabschnitte KA1, KA2 weisen jeweils ihren Ursprung im Wendepunkt WP auf, d.h. haben dort einen Krümmungsradius R = ∞ (nachfolgend als Klothoidenradius bezeichnet), d.h. die Klothoidenabschnitte KA1, KA2 gehen im Wendepunkt WP krümmungsfrei ineinander über. Anders ausgedrückt findet im Wendepunkt WP der Krümmungswechsel, also die Richtung der Krümmung, statt. Der Krümmungsradius wird dann mit steigender Bogenlänge zu den Transportstreckenabschnitten TSA1, TSA2 hin größer, bis dieser dem Radius des Kreisbogens ($R_{TE1}$, $R_{TE2}$) entspricht, auf dem die Behälter durch die jeweiligen Transportelemente TE1, TE2 in den jeweiligen Transportstreckenabschnitten TSA1, TSA2 gefördert werden ($R_{KA1} = R_{TE1}$; $R_{KA2} = R_{TE2}$).

Alternativ zu dem in Figur 3 gezeigten Verlauf kann der dritte Transportstreckenabschnitt TSA3 lediglich einen einzigen Klothoidenabschnitt aufweisen. So kann beispielsweise der in Figur 2 gezeigte erste Klothoidenabschnitt KA1 durch einen geraden Transportstreckenbereich ersetzt sein. Weiterhin alternativ zu dem in Figur 2 gezeigten Verlauf kann der dritte Transportstreckenabschnitt TSA3 zwischen den zwei Klothoidenabschnitten KA1, KA2 einen gerade ausgebildeten Transportstreckenbereich aufweisen. Die Ausformung des dritten Transportstreckenabschnitts TSA3 kann so abhängig von den jeweiligen Gegebenheiten, beispielsweise dem Durchmesser der Transportelemente TE1, TE2 entsprechend gewählt werden.

Nachfolgend wird näher auf bevorzugte Ausformungen der Klothoidenabschnitte KA1, KA2 und deren Dimensionierungen eingegangen. Eine Klothoide ist eine Kurve, bei der sich die Krümmung linear mit der Bogenlänge, auch als Klothoidenlänge bezeichnet, ändert. Damit gilt:

$$KL \cdot R = const. \qquad \text{(Gleichung 1)}$$

wobei:

KL die Klothoidenlänge und R der Krümmungsradius am Ende des Klothoidenabschnitts, auch als Klothoidenradius bezeichnet, ist.

Diese Konstante wird häufig durch einen Klothoidenparameter A ausgedrückt, so dass gilt:

$$KL \cdot R = A^2 \quad \text{(Gleichung 2)}$$

Eine weitere charakteristische Kenngröße einer Klothoide ist der Tangentenwinkel TW zwischen der Haupttangente HT zu Beginn der Klothoide (d.h. am Wendepunkt WP) und der Tangente an einem beliebigen Kurvenpunkt der Klothoide. Der Tangentenwinkel TW kann wie folgt beschrieben werden:

$$TW[rad] = \frac{KL}{2R} = \frac{A^2}{2R^2} \qquad \text{(Gleichung 3)}$$

Durch Umstellen der Gleichung 3 kann der Klothoidenparameter A wie folgt errechnet werden:

$$A = \sqrt{TW \cdot 2 \cdot R^2} \quad \text{(Gleichung 4)}$$

Bei der Dimensionierung der Parameter für die Klothoidenabschnitte KA1, KA2 wird der Klothoidenradius R am Ende des jeweiligen Klothoidenabschnitts, d.h. im Übergangspunkt zum dem Transportstreckenabschnitt TSA1, TSA2, um einen Querruck an dieser Übergangsstelle zu vermeiden, vorteilhafterweise zu

$$R = \frac{TK}{2} \quad \text{(Gleichung 5)}$$

gewählt, wobei TK der Durchmesser des Transportelements TE1, TE2 ist, von dem der Klothoidenabschnitt abgeht bzw. zu dem der Klothoidenabschnitt anschließt. So beträgt der Klothoidenradius R des Klothoidenabschnitts KA1 vorzugsweise die Hälfte des Durchmessers TK des Transportelements TE1 und der Klothoidenradius R des Klothoidenabschnitts KA2 vorzugsweise die Hälfte des Durchmessers TK des Transportelements TE2.

In Untersuchungen der geometrischen Verhältnisse hat die Anmelderin herausgefunden, dass der Tangentenwinkel $TW_{KA1}$, $TW_{KA2}$ der Tangente im Übergang des jeweiligen Klothoidenabschnitts KA1, KA2 zum kreisbogenförmigen Transportstreckenabschnitt TSA1, TSA2 vorteilhafterweise in Bereichen zwischen 0,06rad und 0,5rad, bevorzugt zwischen 0,1 rad und 0,4rad liegt. Besonders bevorzugt ist ein Wert des Tangentenwinkels TW von 0,2rad, da sich dadurch die Achsabstände der Transportelemente und/oder der Greiferhub, der im Bereich des dritten Transportstreckenabschnitt TSA3 vollzogen wird, in in der Praxis gut realisierbaren Bereichen bewegen, d.h. nicht zu groß werden.

Der Klothoidenparameter A wird vorzugsweise im Bereich zwischen 125 mm und 250 mm, vorzugsweise im Bereich zwischen 150 mm und 200 mm, besonders bevorzugt im Bereich zwischen 170 mm und 180 mm, insbesondere 177 mm gewählt.

Die Klothoidenlänge KL liegt vorzugsweise im Bereich zwischen 50 mm und 250 mm, besonders bevorzugt zwischen 100 mm und 200 mm.

Durch die vorgenannte Parametrisierung des zumindest einen Klothoidenabschnitts wird eine möglichst ruckfreie Übergabe des Behälters zwischen den Transportelementen erreicht.

Die Übergabe des Behälters 2 zwischen den Transportelementen TE1 und TE2 bzw. den Transportelementen TE2 und TE3 entlang der Bahn eines Übergangskurvenabschnitts oder einer wie vorne beschriebenen Übergangskurve auf dem Transportstreckenabschnitt TSA3 kann insbesondere durch ein Transportelement TE2 in Form eines Transfersterns erreicht werden, der Behälterfixiermittel, insbesondere Behältergreifer aufweist, die radial in Bezug auf die Maschinenachse MA, um die dieses Transportelement TE2 rotativ angetrieben ist, verschiebbar sind. In anderen Worten können die Behältergreifer derart ausgebildet sein, dass diese zwischen einer radial inneren Stellung und einer radial äußeren Stellung verschiebbar sind. Die radiale Verschiebung der Behältergreifer erfolgt vorzugsweise mittels einer Kurvensteuerung, d.h. zumindest einer Steuerkurve. Vorzugsweise ist die Steuerkurve ortsfest vorgesehen und eine am Behältergreifer vorgesehene Rolle wirkt mit der Steuerkurve derart zusammen, dass der Behältergreifer abhängig von der Winkelstellung des Rotors radial nach innen bzw. nach außen in die Verschiebeposition gebracht wird, so dass der Behälter auf dem in Fig. 2 gezeigten Kurvenverlauf im Bereich des Transportstreckenabschnitts TSA3 bewegt wird.

Vorzugsweise wird der Behältergreifer für die Übernahme des Behälters im Übergabebereich zwischen den Transportstreckenabschnitten TSA1 und TSA3 radial nach außen vorgeschoben positioniert und wird dann bei der Bewegung durch den dritten Transportstreckenabschnitt TSA3 derart in Richtung der Maschinenachse MA des zweiten Transportelements TE2 radial zurückgezogen, dass der Behälter dem gewünschten, zumindest einen Übergangskurvenabschnitt aufweisenden Transportstreckenverlauf folgt. Zur Übergabe des Behälters an das dritte Transportelement TE3 wird der Behältergreifer in umgekehrter Weise radial nach außen bewegt, so dass der Behälter in einem zumindest einen klothoidenförmigen Übergangskurvenabschnitt aufweisenden Transportstreckenverlauf an das dritte Transportelement TE3 übergeben wird.

Nach der Übergabe an das dritte Transportelement TE3 kann der Behältergreifer in seiner radial außenstehenden Position verbleiben bzw. es kann die Position geringfügig angepasst werden, bis der jeweilige Behältergreifer erneut einen Behälter vom ersten Transportelement TE1 aufnimmt. Alternativ ist es möglich, dass der Behältergreifer nach dem Abgeben des Behälters an das dritte Transportelement TE3 radial nach innen zurückgezogen wird und erst kurz vor dem Aufnehmen eines neuen Behälters vom ersten Transportelement TE1 wieder radial nach außen bewegt wird.

In den vorherigen Ausführungen wurde eine Art eines Übergangsbogens in Form einer Klothoide oder Klothoidenkurve beschrieben. Alternativ und in analoger Anwendung kann dort jeweils auch ein anderer geeigneter Übergangsbogen mit knickfreier, stetig zu- oder abnehmender Krümmungsänderung vorgesehen werden, insbesondere ein Übergangsbogen in Form eines Blossbogens oder Blossbogenabschnitts. Auch Kombinationen eines Blossbogen/Blossbogenabschnitts und einer Klothoide bzw. eines Klothoidenabschnitts sind grundsätzlich denkbar.

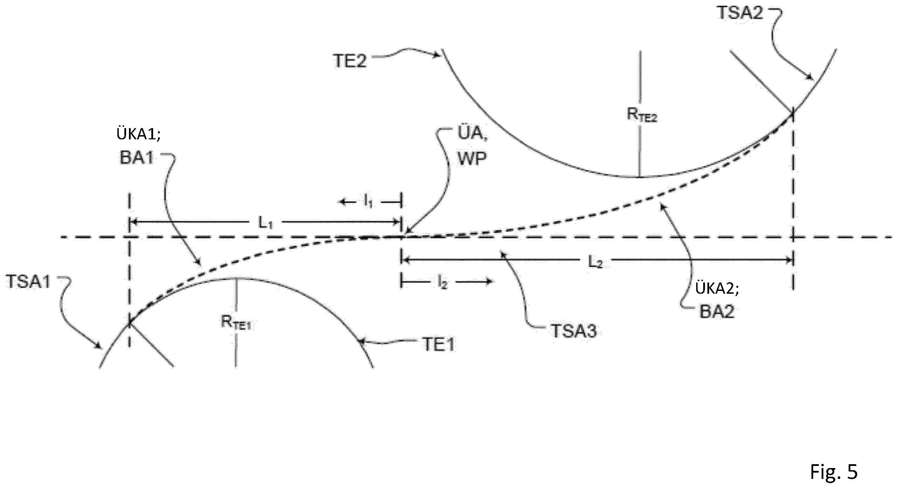

Figur 5 zeigt analog zur Figur 3 einen Ausschnitt der Transportstrecke TS der Figur 1 im Bereich des gestrichelt eingezeichneten Ovals, d.h. einen Ausschnitt der Transportstrecke TS im Übergabebereich zwischen dem ersten und zweiten Transportelement TE1, TE2 bei dem zumindest ein Übergangskurvenabschnitt ÜKA1, ÜKA2 des dritten Transportstreckenabschnitts TSA3 als Klothoidenabschnitt und/oder Blossbogenabschnitt BA1, BA2 ausgebildet ist. Dieser Übergabebereich ist weist zwei Blossbogenabschnitte BA1, BA2 auf, mittels denen eine querruckfreie oder im Wesentlichen querruckfreie Übergabe der Behälter realisiert wird. Ein vom ersten Transportelement TE1 zum zweiten Transportelement TE2 geförderter Behälter durchläuft dabei den dritten Transportstreckenabschnitt TSA3, der im gezeigten Ausführungsbeispiel einen ersten Blossbogenabschnitt BA1 und einen zweiten Blossbogenabschnitt BA2 aufweist.

Die Krümmung k der Blossbogenabschnitte BA1, BA2 lässt sich durch folgende Formel beschreiben:

$$k = \frac{3}{R \cdot L^2} \cdot l^2 - \frac{2}{R \cdot L^3} \cdot l^3$$

Dabei ist R ein Radius eines Anschlusskreisbogens, d.h. beispielsweise der Radius $R_{TE1}$, $R_{TE2}$ des jeweiligen Transportelements TE1, TE2, zu dem hin der Blossbogenabschnitt den Übergang bildet. I eine Zwischenlänge eines Übergangsbogenabschnitts von einem Übergangsbogenanfang ÜA (auch als Wendepunkt WP des dritten Transportstreckenabschnitts TSA3 bezeichnet) betrachtet bildet (im gezeigten Ausführungsbeispiel die Zwischenlängen $l_1$, $l_2$ der jeweiligen Blossbogenabschnitte BA1, BA2), und L die Gesamtlänge des Übergangsbogens bzw. des Blossbogenabschnitts bildet (im gezeigten Ausführungsbeispiel die Längen $L_1$, $L_2$ der jeweiligen Blossbogenabschnitte BA1, BA2).

Die Erfindung wurde voranstehend an Ausführungsbeispielen beschrieben. Es versteht sich, dass eine Vielzahl von Änderungen oder Abwandlungen möglich sind, sofern diese den durch die Patentansprüche definierte Schutzbereich der Erfindung nicht verlassen.

**Bezugszeichenliste**

| | |
|---|---|
| 1 | Vorrichtung |
| 2 | Behälter |
| 4 | Führungsgeländer |
| 5 | Gasse |
| | |
| 50.1 | erste Verstelleinrichtung |
| 50.2 | zweite Verstelleinrichtung |
| 50.3 | dritte Verstelleinrichtung |
| 51.1 | erste Steuerleitung |
| 51.2 | zweite Steuerleitung |
| 51.3 | dritte Steuerleitung |
| 52 | Steuer- und Auswerteeinheit |
| 53.1 | erste Sensoreinrichtung |
| 53.2 | zweite Sensoreinrichtung |
| 53.3 | dritte Sensoreinrichtung |
| 54.1 | erste Signalleitung |
| 54.2 | zweite Signalleitung |
| 54.3 | dritte Signalleitung |
| | |
| A | Achse |
| BA1 | erster Blossbogenabschnitt |
| BA2 | zweiter Blossbogenabschnitt |
| HT | Haupttangente |
| KA1, KA2 | erster/zweiter Klothoidenabschnitt |
| $KL_{KA1}$ | Klothoidenlänge des ersten Klothoidenabschnitts |
| $KL_{KA2}$ | Klothoidenlänge des zweiten Klothoidenabschnitts |
| MA | Maschinenachse |
| $R_{KA1}$ | Radius des ersten Klothoidenabschnitts |
| $R_{KA2}$ | Radius des zweiten Klothoidenabschnitts |

| $R_{TE1}$ | Radius der Transportbahn durch erstes Transportelement |
| $R_{TE2}$ | Radius der Transportbahn durch zweites Transportelement |
| TE1 | erstes Transportelement |
| TE2 | zweites Transportelement |
| TS | Transportstrecke |
| TSA1 | erster Transportstreckenabschnitt |
| TSA2 | zweiter Transportstreckenabschnitt |
| TSA3 | dritter Transportstreckenabschnitt |
| $TW_{KA1}$ | Tangentenwinkel des ersten Klothoidenabschnitts |
| $TW_{KA2}$ | Tangentenwinkel des zweiten Klothoidenabschnitts |
| ÜA | Übergangsbogenanfang |
| ÜKA1 | erster Übergabekurvenabschnitt |
| ÜKA2 | zweiter Übergabekurvenabschnitt |
| ÜKA3 | dritter Übergabekurvenabschnitt |
| WP | Wendepunkt |

**Patentansprüche**

1. Vorrichtung (1) zum Transportieren von Behältern (2) auf einer Transportstrecke (TS) in einer Transportrichtung (A), umfassend zumindest ein erstes Transportelement (TE1) und ein zweites Transportelement (TE2), die über einen Transportstreckenabschnitt (TSA) entlang der Transportstrecke (TS) verbunden sind, wobei der Transportstreckenabschnitt (TSA) einen ersten und einen zweiten Transportstreckenabschnitt (TSA1, TSA2) aufweist, von denen zumindest der erste und/oder zweite Transportstreckenabschnitt (TSA1, TSA2) teilkreisförmig ausgebildet ist und wobei zwischen dem ersten und zweiten Transportstreckenabschnitt (TSA1, TSA2) ein dritter Transportstreckenabschnitt (TSA3) entlang der Transportstrecke (TS) vorgesehen ist, wobei der dritte Transportstreckenabschnitt (TSA3) zumindest einen Übergangskurvenabschnitt (ÜKA1, ÜKA2, ÜKA3) mit einer verstellbaren Kurvenbahn aufweist, und wobei die Krümmung der Kurvenbahn des zumindest einen Übergangskurvenabschnitts (ÜKA1, ÜKA2, ÜKA3) jeweils mittels zumindest einer Verstelleinrichtung (50.1, 50.2, 50.3) der Vorrichtung (1) motorisch gesteuert- und/oder geregelt einstellbar ausgebildet ist, **dadurch gekennzeichnet, dass** zumindest eine über eine Steuer- und Auswerteeinrichtung (52) der Vorrichtung (1) mit der entsprechenden Verstelleinrichtung (50.1, 50.2, 50.3) elektrisch verbundene Sensoreinrichtung (53.1, 53.2, 53.3) vorgesehen ist, die dazu ausgebildet ist, in einem ortsfesten Erfassungsbereich eine Ist-Schwapphöhe (IH) des jeweiligen Behälters (2) zu erfassen und mittels einer in der elektronischen Steuer- und Auswerteeinrichtung (52) hinterlegten Auswertelektronik mit einer dort gespeicherten Soll-Schwapphöhe (SH) zu vergleichen und aus einer eventuellen Abweichung ein Signal zu erzeugen und die betreffende Verstelleinrichtungen (50.1, 50.2, 50.3) anzusteuern, um ein an die Abweichung zwischen der Ist-Schwapphöhe (IH) und der Soll-Schwapphöhe (SH) erforderliches Verstellen zumindest einer Länge (L1, L2, L3) und/oder zumindest eines Radius ($R_{ÜKA1, ÜKA2, ÜKA3}$) und/oder zumindest eines Mittelpunkt (MP1, MP2, MP3) des zugehörigen Radius ($R_{ÜKA1, ÜKA2, ÜKA3}$) in einer X und/oder Y- Richtung der Krümmung der Kurvenbahn des zumindest einen Übergangskurvenabschnitts (ÜKA1, ÜKA2, ÜKA3) mittels der zumindest einen Verstelleinrichtung (50.1, 50.2, 50.3) zu veranlassen.

2. Vorrichtung (1) nach Anspruch 1, **dadurch gekennzeichnet, dass** zumindest eine Länge (L1, L2, L3) und/oder zumindest ein Radius ($R_{ÜKA1, ÜKA2, ÜKA3}$) und/oder zumindest ein Mittelpunkt (MP1, MP2, MP3) des zugehörigen Radius ($R_{ÜKA1, ÜKA2, ÜKA3}$) in einer X und/oder Y- Richtung der Krümmung der Kurvenbahn des zumindest einen Übergangskurvenabschnitts (ÜKA1, ÜKA2, ÜKA3) mittels der zumindest einen Verstelleinrichtung (50.1, 50.2, 50.3) motorisch einstellbar ausgebildet ist.

3. Vorrichtung (1) nach einem der vorangehenden Ansprüche, **dadurch gekennzeichnet, dass** die Behälter (2) entlang des ersten oder dritten Transportstreckenabschnittes (TSA1, TSA3) durch Führungsgeländer (4) geführt sind, wobei die durch die Führungsgeländer (4) vorgegebene Kurvenbahn des zumindest einen Übergangskurvenabschnitts (ÜKA1, ÜKA2, ÜKA3) mittels der zumindest einen Verstelleinrichtung (50.1, 50.2, 50.3) motorisch einstellbar ausgebildet ist.

4. Vorrichtung (1) nach einem der vorangehenden Ansprüche, **dadurch gekennzeichnet, dass** dem zumindest einen Übergangskurvenabschnitt (ÜKA1, ÜKA2, ÜKA3) des dritten Transportstreckenabschnittes (TSA3) jeweils mehrere Verstelleinrichtungen (50.1, 50.2, 50.3) zugeordnet sind, die beabstandet zueinander entlang des zumindest einen Übergangskurvenabschnitts (ÜKA1, ÜKA2, ÜKA3) vorgesehen sind.

**5.** Vorrichtung (1) nach einem der vorangehenden Ansprüche, **dadurch gekennzeichnet, dass** die Steuer- und Auswerteeinrichtung (52) dazu ausgebildet ist, das abhängig von der Abweichung zwischen der Ist-Schwapphöhe (IH) und der Soll-Schwapphöhe (SH) erzeugte Signal zu verwenden, um die Leistung der Vorrichtung (1) zu verändern, insbesondere zu steuern und/oder zu regeln.

**6.** Vorrichtung (1) nach einem der vorangehenden Ansprüche, **dadurch gekennzeichnet, dass** der dritte Transportstreckenabschnitt (TSA3) einen ersten und zweiten Übergangskurvenabschnitt (ÜKA1, ÜKA2) aufweist, die jeweils eine separat und unabhängig voneinander einstellbare Kurvenbahn aufweisen.

**7.** Vorrichtung (1) nach Anspruch 6, **dadurch gekennzeichnet, dass** eine erste Länge (L1) und/oder ein erster Radius ($R_{ÜKA1}$) und/oder ein erster Mittelpunkt (MP1) des zugehörigen ersten Radius ($R_{ÜKA1}$) in einer X und/oder Y- Richtung der Krümmung der Kurvenbahn des ersten Übergangskurvenabschnitts (ÜKA1) mittels zumindest einer ersten Verstelleinrichtung (50.1) motorisch einstellbar ausgebildet ist und eine zweite Länge (L2) und/oder ein zweiter Radius ($R_{ÜKA2}$) und/oder ein zweiter Mittelpunkt (MP2) des zugehörigen zweiten Radius ($R_{ÜKA2}$) in einer X und/oder Y- Richtung der Krümmung der Kurvenbahn des zweiten Übergangskurvenabschnitts (ÜKA2) mittels zumindest einer zweiten Verstelleinrichtung (50.2) motorisch einstellbar ausgebildet ist.

**8.** Vorrichtung (1) nach Anspruch 6 oder 7, **dadurch gekennzeichnet, dass** der dritte Transportstreckenabschnitt (TSA3) einen ersten, einen zweiten sowie einen dritten Übergangskurvenabschnitt (ÜKA1, ÜKA2, ÜKA3) aufweist, die jeweils eine separat und unabhängig voneinander einstellbare Kurvenbahn aufweisen.

**9.** Vorrichtung (1) nach einem der Ansprüche 6 bis 8, **dadurch gekennzeichnet, dass** eine dritte Länge (L3) und/oder ein dritter Radius ($R_{ÜKA3}$) und/oder ein dritter Mittelpunkt (MP3) des zugehörigen dritten Radius ($R_{ÜKA3}$) in einer X und/oder Y- Richtung der Krümmung der Kurvenbahn des dritten Übergangskurvenabschnitts (ÜKA3) mittels zumindest einer dritten Verstelleinrichtung (50.3) motorisch einstellbar ausgebildet ist.

**10.** Vorrichtung (1) nach einem der vorangehenden Ansprüche, **dadurch gekennzeichnet, dass** zumindest ein Übergangskurvenabschnitt (ÜKA1, ÜKA2, ÜKA3) des dritten Transportstreckenabschnitts (TSA3) als Klothoidenabschnitt (KA1, KA2) und/oder Blossbogenabschnitt (BA1, BA2) ausgebildet ist.

**11.** Vorrichtung (1) nach Anspruch 10, **dadurch gekennzeichnet, dass** der zumindest eine Klothoidenabschnitt (KA1, KA2) durch folgende Formeln beschrieben ist:

$$A = \sqrt{2 \cdot TW \cdot R^2};$$

$$KL = \frac{A^2}{R};$$

wobei A ein Klothoidenparameter, TW der Tangentenwinkel, R der Klothoidenradius und KL die Klothoidenlänge sind.

**12.** Vorrichtung (1) nach Anspruch 11, **dadurch gekennzeichnet, dass** der Klothoidenparameter A im Bereich zwischen 125 mm und 250 mm, insbesondere im Bereich zwischen 150 mm und 200 mm, besonders bevorzugt im Bereich zwischen 170 mm und 180 mm, gewählt ist.

**13.** Vorrichtung (1) nach Anspruch 11 oder 12, **dadurch gekennzeichnet, dass** der Tangentenwinkel TW im Bereich zwischen 0,06 rad und 0,5 rad, insbesondere im Bereich zwischen 0,1 rad und 0,4 rad, besonders bevorzugt zu 0,2 rad, gewählt ist.

**14.** Vorrichtung (1) nach Anspruch 10, **dadurch gekennzeichnet, dass** die Krümmung des zumindest einen Blossbogenabschnitts (BA1, BA2) durch folgende Formel beschrieben ist:

$$k = \frac{3}{R \cdot L^2} \cdot l^2 - \frac{2}{R \cdot L^3} \cdot l^3$$

wobei k die Krümmung, R ein Radius eines Anschlusskreisbogens, l eine Zwischenlänge eines Übergangsbogen-

abschnitts von einem Übergangsbogenanfang (ÜA) betrachtet und L die Gesamtlänge des Übergangsbogens sind.

**15.** Vorrichtung (1) nach einem der Ansprüche 10 bis 14, **dadurch gekennzeichnet, dass** die Klothoidenlänge KL und/oder die Gesamtlänge des Übergangsbogens L im Bereich zwischen 50 mm und 250 mm, insbesondere im Bereich zwischen 100 mm und 200 mm, liegt.

**16.** Verfahren zum Transportieren von Behältern (2) auf einer Transportstrecke (TS) mit einer Vorrichtung (1) gemäß einem der vorangehenden Ansprüche 1 bis 15 in einer Transportrichtung (A) mittels des ersten und des zweiten Transportelements (TE1, TE2), die über einen Transportstreckenabschnitt (TSA) entlang der Transportstrecke (TS) verbunden sind, wobei der Transportstreckenabschnitt (TSA) einen ersten und einen zweiten Transportstreckenabschnitt (TSA1, TSA2) aufweist, von denen zumindest der erste und/oder zweite Transportstreckenabschnitt (TSA1, TSA2) teilkreisförmig ausgebildet ist und wobei zwischen dem ersten und zweiten Transportstreckenabschnitt (TSA1, TSA2) ein dritter Transportstreckenabschnitt (TSA3) entlang der Transportstrecke (TS) vorgesehen wird, wobei der dritte Transportstreckenabschnitt (TSA3) zumindest einen Übergangskurvenabschnitt (ÜKA1, ÜKA2, ÜKS3) aufweist, deren Kurvenbahn verstellbar vorgesehen wird.

**17.** Verfahren nach Anspruch 16, **dadurch gekennzeichnet, dass** ein abhängig von der Abweichung zwischen der Ist-Schwapphöhe (IH) des jeweiligen Behälters (2) und der Soll-Schwapphöhe (SH) erzeugtes Signal verwendet wird, um die Leistung der Vorrichtung (1) zu verändern, insbesondere zu steuern und/oder zu regeln.

**18.** Verfahren nach Anspruch 17, bei dem die Vorrichtung (1) zunächst mit einer Transportleistung gestartet wird, die niedriger ausgebildet ist, aus deren mögliche Maximalleistung und die Ist-Schwapphöhe (IH) mittels der zumindest einen Sensoreinrichtung (53.1, 53.2, 53.3) erfasst wird, bei dem anschließend abhängig von dem von der Abweichung zwischen der Ist-Schwapphöhe (IH) und der Soll-Schwapphöhe (SH) erzeugten Signal die Leistung so lange verändert wird, bis die Ist-Schwapphöhe (IH) der Soll-Schwapphöhe (SH) entspricht und im Anschluss daran eine Verstellung der Krümmung der Kurvenbahn des zumindest einen Übergangskurvenabschnitts mittels der zumindest einen Verstelleinrichtung (50.1, 50.2, 50.3) erfolgt.

**19.** Verfahren nach Anspruch 17 oder 18, bei dem die Vorrichtung (1) zunächst mit einer Transportleistung gestartet wird, die niedriger ausgebildet ist, aus deren mögliche Maximalleistung und die Ist-Schwapphöhe (IH) mittels der zumindest einen Sensoreinrichtung (53.1, 53.2, 53.3) erfasst wird, bei dem zunächst eine Verstellung der Krümmung der Kurvenbahn des zumindest einen Übergangskurvenabschnitts mittels der zumindest einen Verstelleinrichtung (50.1, 50.2, 50.3) erfolgt und im Anschluss daran abhängig von dem von der Abweichung zwischen der Ist-Schwapphöhe (IH) und der Soll-Schwapphöhe (SH) erzeugten Signal die Leistung der Vorrichtung zum Transportieren von Behältern (2) so lange verändert, bis die Ist-Schwapphöhe (IH) der Soll-Schwapphöhe (SH) entspricht.

**Claims**

**1.** Device (1) for transporting containers (2) on a transport path (TS) in a transport direction (A), comprising at least one first transport element (TE1) and a second transport element (TE2), which are interconnected along the transport path (TS) by a transport path portion (TSA), wherein the transport path portion (TSA) comprises a first and a second transport path portion (TSA1, TSA2), of which at least the first and/or second transport path portion (TSA1, TSA2) is in the form of a partial circle, and wherein a third transport path portion (TSA3) is provided along the transport path (TS) between the first and second transport path portions (TSA1, TSA2), wherein the third transport path portion (TSA3) comprises at least one transition curve portion (ÜKA1, ÜKA2, ÜKA3) with an adjustable curve path, and wherein the curvature of the curve path of the at least one transition curve portion (ÜKA1,ÜKA2, ÜKA3) is configured in each case as being adjustable by means of at least one adjustment device (50.1, 50.2, 50.3) of the device (1) in a motor-controlled and/or motor-regulated manner, **characterised in that** at least one sensor device (53.1, 53.2, 53.3) is provided, which is electrically connected to the corresponding adjustment device (50.1, 50.2, 50.3) by means of a control and evaluation device (52) of the device (1), which sensor device is configured such as to detect an actual splash height (IH) of the respective container (2) in a fixed-position detection region, and, by means of an evaluation electronics unit located in the electronic control and evaluation device (52), to compare this with a stored reference splash height (SH), and to generate a signal from a possible deviation between the values and to actuate the adjustment devices (50.1, 50.2, 50.3) concerned, in order to carry out the adjustment required by the deviation between the actual splash height (IH) and the reference splash height (SH) of at least one length (L1, L2, L3) and/or at least one radius (RÜKA1, ÜKA2, ÜKA3) and/or of at least one mid-point (MP1,MP2, MP3) of the associated radius (RÜKA1, ÜKA2, ÜKA3) in an X-direction and/or Y-direction of the curvature of the curve path of the at least one transition curve portion (ÜKA1, ÜKA2, ÜKA3), by means of the at least one adjustment device (50.1, 50.2, 50.3).

2. Device (1) according to claim 1, **characterised in that** at least one length (L1, L2, L3) and/or at least one radius (RÜKA1, ÜKA2, ÜKA3) and/or at least one mid-point (MP1, MP2, MP3) of the associated radius (RÜKA1, ÜKA2, ÜKA3) is configured such as to be motor-adjustable in an X-direction and/or Y-direction of the curvature of the curve path of the at least one transition curve portion (ÜKA1, ÜKA2, ÜKA3) by means of the at least one adjustment device (50.1, 50.2, 50.3).

3. Device (1) according to any one of the preceding claims, **characterised in that** the containers (2) are guided along the first or third transport path portion (TSA1, TSA3) by means of guide rails (4), wherein the curve path of the at least one transition curve portion (ÜKA1, ÜKA2, ÜKA3) determined by the guide rails (4) is configured such as to be motor-adjusted by means of the at least one adjustment device (50.1, 50.2, 50.3).

4. Device (1) according to any one of the preceding claims, **characterised in that** in each case several adjustment devices (50.1, 50.2, 50.3) are assigned to the at least one transition curve portion (ÜKA1, ÜKA2, ÜKA3) of the third transport path portion (TSA3), which are provided spaced apart from one another along the at least one transition curve portion (ÜKA1, ÜKA2, ÜKA3).

5. Device (1) according to any one of the preceding claims, **characterised in that** the control and evaluation device (52) is configured such as to use the signal generated as a dependency of the deviation between the actual splash height (IH) and the reference splash height (SH) in order to change, in particular control and/or regulate, the output of the device (1).

6. Device (1) according to any one of the preceding claims, **characterised in that** the third transport path portion (TSA3) comprises a first and second transition curve portion (ÜKA1, ÜKA2), which each comprise curve paths which are adjustable separately and independently of one another.

7. Device (1) according to claim 6, **characterised in that** a first length (L1) and/or a first radius (RÜKA) and/or a first mid-point (MP1) of the associated first radius (RÜKA1), in an X-direction and/or Y-direction of the curvature of the first transition curve portion (ÜKA1) is configured to be motor-adjustable by means of at least one first adjustment device (50.1), and a second length (L2) and/or a second radius (RÜKA2) and/or a second mid-point (MP2) of the associated second radius(RÜKA2), in an X-direction and/or Y-direction of the curvature of the curve path of the second transition curve portion ((ÜKA2) is configured to be motor-adjustable by means of at least a second adjustment device (50.2).

8. Device (1) according to claim 6 or 7, **characterised in that** the third transport path portion (TSA3) comprises a first, a second, and a third transition curve portion (ÜKA1, ÜKA2, ÜKA3), which each comprise curve paths which are adjustable separately and independently of one another.

9. Device (1) according to any one of claims 6 to 8, **characterised in that** a third length (L3) and/or a third radius (RÜKA3) and/or a third mid-point (MP3) of the associated third radius (RÜKA3) is configured to be motor-adjustable, in an X-direction and/or Y-direction of the curvature of the curve path of the third transition curve portion (ÜKA3), by means of at least one third adjustment device (50.3).

10. Device (1) according to any one of the preceding claims, **characterised in that** at least one transition curve portion (ÜKA1, ÜKA2, ÜKA3) of the third transport path portion (TSA3) is configured as a clothoid section (KA1, KA2) and/or as a Bloss curve section (BA1, BA2).

11. Device (1) according to claim 10, **characterised in that** the at least one clothoid section (KA1, KA2) is described by the following formula:

$$A = \sqrt{2 \cdot TW \cdot R^2};$$

$$KL = \frac{A^2}{R};$$

where A is a clothoid parameter, TW is the tangent angle, R is the clothoid radius, and KL is the clothoid length.

**12.** Device (1) according to claim 11, **characterised in that** the clothoid parameter A is selected in the range between 125 mm and 250 mm, in particular in the range between 150 mm and 200 mm, and particular preference in the range between 170 mm and 180 mm.

**13.** Device (1) according to claim 11 or 12, **characterised in that** the tangent angle TW is selected in the range between 0.06 rad and 0.5 rad, in particular in the range between 0.1 rad and 0.4 rad, and for particular preference as 0.2 rad.

**14.** Device (1) according to claim 10, **characterised in that** the curvature of the at least one Bloss curve section (BA1, BA2) is described by the following formula:

$$k = \frac{3}{R \cdot L^2} \cdot l^2 - \frac{2}{R \cdot L^3} \cdot l^3$$

where k is the curvature, R is a radius of a connection circle curve, I is an intermediate length of a transition curve portion, seen from a start of a transition curve (ÜA) and L is the total length of the transition curve.

**15.** Device (1) according to any one of claims 10 to 14, **characterised in that** the clothoid length KL and/or the total length of the transition curve L lies in the range between 50 mm and 250 mm, in particular in the range between 100 mm and 200 mm.

**16.** Method for transporting containers (2) on a transport path (TS) with a device (1) according to any one of the preceding claims 1 to 15 in a transport direction (A) by means of the first and second transport elements (TE1, TE2), which are connected over a transport path portion (TSA) along the transport path (TS), wherein the transport path portion (TSA) comprises a first and a second transport path portion (TSA1, TSA2), of which at least the first and/or second transport path portion (TSA1, TSA2) is configured in the form of a partial circle, and wherein a third transport path portion (TSA3) is provided between the first and second transport path portion (TSA1, TSA2) along the transport path (TS), wherein the third transport path portion (TSA3) comprises at least one transition curve portion (ÜKA1, ÜKA2, ÜKA3), of which the curve path is provided as adjustable.

**17.** Method according to claim 16, **characterised in that** a signal, generated as a dependency of the deviation between the actual splash height (IH) of the respective container (2) and the reference splash height (SH), is used in order to change, in particular control and/or regulate, the output of the device (1).

**18.** Method according to claim 17, wherein the device (1) is started with a transport output capacity which is configured as low, and from which a possible maximum output and the actual splash height (IH) are detected by means of the at least one sensor device (53.1, 53.2, 53.3), wherein, by means of the signal which is subsequently generated as a dependency of the deviation between the actual splash height (IH) and the reference splash height (SH), the output is changed for as long as until the actual splash height (IH) corresponds to the reference splash height (SH), and, following this, an adjustment is made to the curvature of the curve path of the at least one transition curve portion, by means of the at least one adjustment device (50.1, 50.2, 50.3).

**19.** Method according to claim 17 or 18, wherein the device (1) started with a transport output capacity which is configured as low, and from which a possible maximum output and the actual splash height (IH) are detected by means of the at least one sensor device (53.1, 53.2, 53.3), wherein an adjustment is next made to the curvature of the curve path of the at least one transition curve portion by means of the at least one adjustment device (50.1, 50.2, 50.3), and, following this, a signal, generated as a dependency of the deviation between the actual splash height (IH) and the reference splash height (SH), changes the output of the device for transporting containers (2) for as long as required for the actual splash height (IH) to correspond to the reference splash height (SH).

**Revendications**

**1.** Dispositif (1) pour transporter des contenants (2) sur un parcours de transport (TS) dans une direction de transport (A), comprenant au moins un premier élément de transport (TE1) et un deuxième élément de transport (TE2), qui sont reliés par l'intermédiaire d'une section de parcours de transport (TSA) le long du parcours de transport (TS), dans lequel la section de parcours de transport (TSA) présente une première et une deuxième section de parcours de transport (TSA1, TSA2), dont au moins la première et/ou la deuxième section de parcours de transport (TSA1, TSA2) est réalisée de manière partiellement circulaire et dans lequel une troisième section de parcours de transport (TSA3) est prévue le long du parcours de transport (TS) entre la première et la deuxième section de parcours de transport (TSA1, TSA2), dans lequel la troisième section de parcours de transport (TSA3) présente au moins une section de courbe de transition (ÜKA1, ÜKA2, ÜKA3) avec une trajectoire courbe ajustable, et dans lequel la courbure de la trajectoire courbe de l'au moins une section de courbe de transition (ÜKA1, ÜKA2, ÜKA3) est réalisée de manière à pouvoir être réglée de manière commandée et/ou régulée de façon motorisée respectivement au moyen d'au moins un système d'ajustement (50.1, 50.2, 50.3) du dispositif (1), **caractérisé en ce qu'**au moins un système de capteur (53.1, 53.2, 53.3) relié électriquement au système d'ajustement (50.1, 50.2, 50.3) correspondant par l'intermédiaire d'un système de commande et d'évaluation (52) du dispositif (1) est prévu, qui est réalisé pour acquérir une hauteur de ballottement réelle (IH) du contenant (2) respectif dans une zone d'acquisition fixe et pour la comparer à une hauteur de ballottement de consigne (SH) stockée dans celui-ci au moyen d'une électronique d'évaluation mise en mémoire dans le système de commande et d'évaluation (52) électronique et pour produire un signal à partir d'un écart éventuel et pour commander les systèmes d'ajustement (50.1, 50.2, 50.3) concernés, afin de provoquer un ajustement d'au moins une longueur (L1, L2, L3) et/ou d'au moins un rayon ($R_{ÜKA1, ÜKA2, ÜKA3}$) et/ou d'au moins un centre (MP1, MP2, MP3) du rayon ($R_{ÜKA1, ÜKA2, ÜKA3}$) associé nécessaire sur l'écart entre la hauteur de ballottement réelle (IH) et la hauteur de ballottement de consigne (SH) dans une direction X et/ou Y de la courbure de la trajectoire courbe de l'au moins une section de courbe de transition (ÜKA1, ÜKA2, ÜKA3) au moyen de l'au moins un système d'ajustement (50.1, 50.2, 50.3).

2. Dispositif (1) selon la revendication 1, **caractérisé en ce qu'**au moins une longueur (L1, L2, L3) et/ou au moins un rayon ($R_{ÜKA1, ÜKA2, ÜKA3}$) et/ou au moins un centre (MP1, MP2, MP3) du rayon ($R_{ÜKA1, ÜKA2, ÜKA3}$) associé dans une direction X et/ou Y de la courbure de la trajectoire courbe de l'au moins une section de courbe de transition (ÜKA1, ÜKA2, ÜKA3) est réalisé(e) de manière à pouvoir être réglé(e) de façon motorisée au moyen de l'au moins un système d'ajustement (50.1, 50.2, 50.3).

3. Dispositif (1) selon l'une quelconque des revendications précédentes, **caractérisé en ce que** les contenants (2) sont guidés le long de la première ou troisième section de parcours de transport (TSA1, TSA3) par des rampes de guidage (4), dans lequel la trajectoire courbe de l'au moins une section de courbe de transition (ÜKA1, ÜKA2, ÜKA3) prédéfinie par les rampes de guidage (4) est réalisée de manière à pouvoir être réglée de façon motorisée au moyen de l'au moins un système d'ajustement (50.1, 50.2, 50.3).

4. Dispositif (1) selon l'une quelconque des revendications précédentes, **caractérisé en ce que** respectivement plusieurs systèmes d'ajustement (50.1, 50.2, 50.3), qui sont prévus de manière espacée les uns des autres le long de de l'au moins une section de courbe de transition (ÜKA1, ÜKA2, ÜKA3), sont associés à l'au moins une section de courbe de transition (ÜKA1, ÜKA2, ÜKA3) de la troisième section de parcours de transport (TSA3).

5. Dispositif (1) selon l'une quelconque des revendications précédentes, **caractérisé en ce que** le système de commande et d'évaluation (52) est réalisé pour utiliser le signal produit en fonction de l'écart entre la hauteur de ballottement réelle (IH) et la hauteur de ballottement de consigne (SH), afin de modifier, en particulier de commander et/ou de réguler la puissance du dispositif (1).

6. Dispositif (1) selon l'une quelconque des revendications précédentes, **caractérisé en ce que** la troisième section de parcours de transport (TSA3) présente une première et une deuxième section de courbe de transition (ÜKA1, ÜKA2), qui présentent respectivement une trajectoire courbe pouvant être réglée séparément et indépendamment l'une de l'autre.

7. Dispositif (1) selon la revendication 6, **caractérisé en ce qu'**une première longueur (L1) et/ou un premier rayon ($R_{ÜKA1}$) et/ou un premier centre (MP1) du premier rayon ($R_{ÜKA1}$) associé dans une direction X et/ou Y de la courbure de la trajectoire courbe de la première section de courbe de transition (ÜKA1) est réalisé de manière à pouvoir être réglé(e) de façon motorisée au moyen d'au moins un premier système d'ajustement (50.1) et une deuxième longueur (L2) et/ou un deuxième rayon ($R_{ÜKA2}$) et/ou un deuxième centre (MP2) du deuxième rayon ($R_{ÜKA2}$) associé dans une direction X et/ou Y de la courbure de la trajectoire courbe de la deuxième section de courbe de transition (ÜKA2) est réalisé(e) de manière à pouvoir être réglé(e) de façon motorisée au moyen d'au moins un deuxième système d'ajustement (50.2).

8. Dispositif (1) selon la revendication 6 ou 7, **caractérisé en ce que** la troisième section de parcours de transport (TSA3) présente une première, une deuxième ainsi qu'une troisième section de courbe de transition (ÜKA1, ÜKA2, ÜKA3), qui présentent respectivement une trajectoire courbe pouvant être réglée séparément et indépendamment les unes des autres.

9. Dispositif (1) selon l'une quelconque des revendications 6 à 8, **caractérisé en ce qu'**une troisième longueur (L3) et/ou un troisième rayon ($R_{\ddot{U}KAS}$) et/ou un troisième centre (MP3) du troisième rayon ($R_{\ddot{U}KA3}$) associé dans une direction X et/ou Y de la courbure de la trajectoire courbe de la troisième section de courbe de transition (ÜKA3) est réalisé(e) de manière à pouvoir être réglé(e) de façon motorisée au moyen d'au moins un troisième système d'ajustement (50.3).

10. Dispositif (1) selon l'une quelconque des revendications précédentes, **caractérisé en ce qu'**au moins une section de courbe de transition (ÜKA1, ÜKA2, ÜKA3) de la troisième section de parcours de transport (TSA3) est réalisée comme section de clothoïde (KA1, KA2) et/ou section d'arc de Bloss (BA1, BA2).

11. Dispositif (1) selon la revendication 10, **caractérisé en ce que** l'au moins une section de clothoïde (KA1, KA2) est décrite par les formules suivantes :

$$A = \sqrt{2 \cdot TW \cdot R^2};$$

$$KL = \frac{A^2}{R};$$

dans lequel A est un paramètre de clothoïde, TW l'angle de tangente, R le rayon de clothoïde et KL la longueur de clothoïde.

12. Dispositif (1) selon la revendication 11, **caractérisé en ce que** le paramètre de clothoïde A est sélectionné dans la plage comprise entre 125 mm et 250 mm, en particulier dans la plage comprise entre 150 mm et 200 mm, de manière particulièrement préférée dans la plage comprise entre 170 mm et 180 mm.

13. Dispositif (1) selon la revendication 11 ou 12, **caractérisé en ce que** l'angle de tangente TW est sélectionné dans la plage comprise entre 0,06 rad et 0,5 rad, en particulier dans la plage comprise entre 0,1 rad et 0,4 rad, de manière particulièrement préférée jusqu'à 0,2 rad.

14. Dispositif (1) selon la revendication 10, **caractérisé en ce que** la courbure de l'au moins une section d'arc de Bloss (BA1, BA2) est décrite par la formule suivante :

$$k = \frac{3}{R \cdot L^2} \cdot l^2 - \frac{2}{R \cdot L^3} \cdot l^3$$

dans lequel k est la courbure, R un rayon d'un arc de cercle de raccordement, l une longueur intermédiaire d'une section d'arc de transition vue à partir d'un début d'arc de transition (ÜA) et L la longueur totale de l'arc de transition.

15. Dispositif (1) selon l'une quelconque des revendications 10 à 14, **caractérisé en ce que** la longueur de clothoïde KL et/ou la longueur totale de l'arc de transition L se situe dans la plage comprise entre 50 mm et 250 mm, en particulier dans la plage comprise entre 100 mm et 200 mm.

16. Procédé pour transporter des contenants (2) sur un parcours de transport (TS) avec un dispositif (1) selon l'une quelconque des revendications précédentes 1 à 15 dans une direction de transport (A) au moyen du premier et du deuxième élément de transport (TE1, TE2), qui sont reliés par l'intermédiaire d'une section de parcours de transport (TSA) le long du parcours de transport (TS), dans lequel la section de parcours de transport (TSA) présente une première et une deuxième section de parcours de transport (TSA1, TSA2), dont au moins la première et/ou la deuxième section de parcours de transport (TSA1, TSA2) est réalisée de manière partiellement circulaire et dans lequel une troisième section de parcours de transport (TSA3) est prévue le long du parcours de transport (TS) entre la première et la deuxième section de parcours de transport (TSA1, TSA2), dans lequel la troisième section de parcours de transport (TSA3) présente au moins une section de courbe de transition (ÜKA1, ÜKA2, ÜKS3), dont la trajectoire courbe est prévue de manière ajustable.

17. Procédé selon la revendication 16, **caractérisé en ce qu'**un signal produit en fonction de l'écart entre la hauteur de ballottement réelle (IH) du contenant (2) respectif et la hauteur de ballottement de consigne (SH) est utilisé afin de modifier, en particulier de commander et/ou de réguler, la puissance du dispositif (1).

18. Procédé selon la revendication 17, selon lequel le dispositif (1) est démarré tout d'abord avec une puissance de transport qui est réalisée de manière plus faible à partir de sa puissance maximale possible et la hauteur de ballottement réelle (IH) est acquise au moyen de l'au moins un système de capteur (53.1, 53.2, 53.3), selon lequel ensuite en fonction du signal produit par l'écart entre la hauteur de ballottement réelle (IH) et la hauteur de ballottement de consigne (SH), la puissance est modifiée aussi longtemps que la hauteur de ballottement réelle (IH) ne correspond pas à la hauteur de ballottement de consigne (SH) et après cela un ajustement de la courbure de la trajectoire courbe de l'au moins une section de courbe de transition s'effectue au moyen de l'au moins un système d'ajustement (50.1, 50.2, 50.3).

19. Procédé selon la revendication 17 ou 18, selon lequel le dispositif (1) est démarré tout d'abord avec une puissance de transport qui est réalisée de manière plus faible à partir de sa puissance maximale possible et la hauteur de ballottement réelle (IH) est acquise au moyen de l'au moins un système de capteur (53.1, 53.2, 53.3), selon lequel tout d'abord un ajustement de la courbure de la trajectoire courbe de l'au moins une section de courbe de transition s'effectue au moyen de l'au moins un système d'ajustement (50.1, 50.2, 50.3) et après cela en fonction du signal produit par l'écart entre la hauteur de ballottement réelle (IH) et la hauteur de ballottement de consigne (SH) modifie la puissance du dispositif pour transporter des contenants (2) aussi longtemps que la hauteur de ballottement réelle (IH) correspond à la hauteur de ballottement de consigne (SH).

Fig. 1

Fig. 2

Fig. 3

Fig. 4

23

Fig. 5

Fig. 6

EP 3 990 375 B1

**EP 3 990 375 B1**

**IN DER BESCHREIBUNG AUFGEFÜHRTE DOKUMENTE**

**In der Beschreibung aufgeführte Patentdokumente**

- EP 2179960 B1
- EP 2987764 A1